# FASCICULE DE BREVET EUROPEEN

(11) **EP 1 076 796 B1**
(45) Date de publication et mention de la délivrance du brevet: **24.03.2004**
(21) Numéro de dépôt: 99916988.1
(22) Date de dépôt: 04.05.1999
(51) Int. Cl.: F24F 3/00, F24F 12/00, F24F 11/053

(54) **PROCEDE ET DISPOSITIF DE CLIMATISATION**
VERFAHREN UND VORRICHTUNG ZUR KLIMATISIERUNG
AIR CONDITIONING METHOD AND DEVICE

(30) Priorité: 04.05.1998 FR 9805616
(43) Date de publication de la demande: 21.02.2001
(73) Titulaire: Ribo, Robert, F-11400 Verdun-en-Lauragais (FR)
(72) Inventeur: Ribo, Robert, F-11400 Verdun-en-Lauragais (FR)
(74) Mandataire: Cabinet BARRE LAFORGUE & associés
(86) Numéro de dépôt international: PCT/FR1999/001059
(87) Numéro de publication internationale: WO 1999/057491

(56) Documents cités:
- WO-A-97/34112
- FR-A- 2 703 761
- GB-A- 2 258 744
- US-A- 4 942 921

## Description

L'invention vise un procédé et un dispositif de climatisation et/ou de chauffage d'un local comprenant au moins une pièce de service (cuisine, salle de bains, toilettes...) et au moins deux pièces principales (salle de séjour, salon, chambre, hall, bureau...). Elle s'étend également au chauffage et/ou à la climatisation de bâtiments comprenant plusieurs locaux, notamment immeubles de logements collectifs, locaux tertiaires d'hébergement (hôtels, maison de retraite), immeubles de bureaux.....

Cette invention vise, en outre, spécifiquement un procédé et un dispositif de climatisation et/ou de chauffage permettant, outre ce chauffage et/ou cette climatisation, de gérer en toutes saisons les apports d'air neuf exigés par les réglementations en vigueur.

A l'heure actuelle, la solution classique la plus simple de ventilation destinée à permettre un apport d'air neuf réglementaire dans des locaux consiste à disposer des bouches d'entrée d'air en façade dans les pièces principales et des bouches d'extraction dans les pièces de service. Toutefois, cette solution s'avère peu performante et notamment peut conduire à un inconfort et à des nuisances de pollution et/ou acoustiques dans des environnements bruyants et/ou pollués.

Pour ces raisons, la seule solution réellement proposée à l'heure actuelle consiste à utiliser des systèmes double-flux (extraction dans les pièces de service et insufflation dans les pièces principales). Toutefois, cette solution s'avère présenter un prix de revient important en raison de la nécessité de multiplier les colonnes de soufflage. De plus, il s'avère difficile selon cette technique de moduler les débits soufflés dans les pièces principales en fonction des besoins d'apport en air neuf desdites pièces.

Lorsque les locaux sont équipés d'un dispositif de chauffage et/ou de climatisation, la gestion du contrôle de l'air de ventilation à apporter pièce par pièce s'avère également constituer un problème délicat irrésolu à ce jour. En effet, il s'avère à l'heure actuelle matériellement impossible de répartir équitablement le débit d'air neuf pièce par pièce. De plus, l'arrêt du dispositif de chauffage et/ou de climatisation par les moyens de régulation, notamment en mi-saison, ou bien la fermeture d'une ou plusieurs bouches de soufflage conduisent à interrompre tout renouvellement d'air dans toutes les pièces ou dans la (ou les) pièces concernées. Ainsi, aucun dispositif de chauffage et/ou de climatisation actuel à débit variable ne s'avère capable d'assurer la gestion pièce par pièce à la fois de la thermique et de l'air neuf.

La présente invention vise à pallier cet inconvénient et a pour principal objectif de fournir un procédé et un dispositif de chauffage et/ou de climatisation permettant d'assurer , en outre, une gestion de l'air neuf de ventilation pièce par pièce conforme avec les réglementations en vigueur.

Un autre objectif de l'invention est de permettre de moduler les débits d'air neuf en fonction des débits d'air extrait.

Un autre objectif de l'invention est de permettre d'accroître le renouvellement d'air neuf dans une pièce lorsque cette dernière est fortement occupée ou enfumée, et ce sans déficit d'apport d'air neuf dans les autres pièces.

Un autre objectif de l'invention est de permettre de gérer l'apport d'air neuf en fonction de la pollution externe ambiante et du taux d'occupation des locaux.

A cet effet, l'invention vise en premier lieu un procédé de chauffage et/ou de climatisation d'un local comportant au moins une pièce de service et au moins deux pièces principales, consistant :
. à utiliser une unité extérieure et au moins une unité intérieure, l'unité extérieure comprenant des moyens de régulation à puissance variable et un échangeur, et chaque unité intérieure comprenant une reprise d'air, des moyens de ventilation à débit de puissances variables et un échangeur, et étant adaptée pour assurer le chauffage et/ou la climatisation d'au moins deux pièces principales,
. à évacuer un volume donné d'air vicié dans chaque pièce de service,
. à amener un volume donné d'air neuf au niveau des reprises d'air de chaque unité intérieure,
. à mélanger l'air neuf et l'air repris dans chaque unité intérieure en amont de l'échangeur de cette dernière,
. à souffler le mélange air neuf/air repris réchauffé et/ou refroidi dans chaque pièce principale au travers d'au moins une bouche de soufflage alimentée par une unité intérieure, et associée chacune à des moyens de motorisation aptes à permettre de modifier la position d'ouverture desdites bouches,
. et à régler la température dans chaque pièce principale à l'aide de moyens de mesure de température auxquels sont associés les moyens de motorisation des bouches de soufflage, de façon à obtenir un positionnement de chacune de ces bouches apte à permettre de maintenir à une température de consigne prédéterminée chacune desdites pièces principales.

Selon l'invention, ce procédé se caractérise en ce que l'on utilise une unité centrale de gestion reliée aux unités extérieure et intérieure(s), aux moyens de motorisation de chaque bouche de soufflage et aux moyens de mesure de température, et programmé pour se configurer :
- soit dans un mode de gestion des températures des pièces principales durant lequel :
   . elle commande les unités extérieure et intérieure(s) et les moyens de motorisation des bouches de soufflage en fonction des informations reçues des moyens de mesure de température, de façon à maintenir la température de consigne dans chaque pièce principale,
   . elle relève la position des moyens de motorisation de chaque bouche de soufflage de façon à détecter l'éventuelle fermeture totale de la (ou de toutes les) bouche(s) alimentant une pièce principale,
- et dans l'hypothèse où toutes les bouches alimentant au moins une pièce principale sont fermées à se configurer dans un mode de gestion d'air neuf durant lequel :
   . elle mesure le temps de fermeture de la (ou desdites) bouche(s) fermée(s),
   . au-delà d'un temps de fermeture de la (ou desdites) bouche(s) supérieur à un seuil prédéterminé, elle calcule le déficit d'apport d'air neuf dans chaque pièce non alimentée, et commande les moyens de motorisation de toutes les bouches de soufflage, de façon à ouvrir chaque bouche de soufflage initialement fermée, et à fermer les bouches de soufflage des pièces initialement ouvertes, et ce, pendant un laps de temps adapté pour combler le déficit d'apport d'air neuf dans chaque pièce non initialement alimentée,
   . et à se reconfigurer en mode de gestion de température dans les pièces principales, une fois le déficit d'apport d'air neuf comblé.

En premier lieu, un tel procédé peut être exploité, après perfectionnement et aménagement, conformément à l'invention, avec tous les procédés de chauffage et/ou de climatisation utilisés à l'heure actuelle comprenant une unité de soufflage centralisée avec régulation pièce par pièce, à savoir notamment :
- le procédé décrit dans le brevet FR-2 703 761 au nom de Monsieur RIBO,
- les procédés classiques utilisant au moins une unité intérieure et une unité extérieure composées soit :
   . d'un groupe à puissance de chauffage et de refroidissement variable associé à un débit de soufflage modulé en fonction des besoins des locaux traités,
   . d'un groupe centralisé de production d'eau glacée (réversible ou associé à une production de chaleur indépendante) alimentant un ventilo-convecteur dans chaque appartement ou une centrale de traitement d'air par zones.
   . d'une centrale de traitement d'air à débit variable,
   . d'un groupe du type D.R.V. (débit de réfrigérant variable),
   . d'une unité monobloc, du type par exemple appareil de climatisation Air/Air installé en toiture.

Selon l'invention, la gestion du renouvellement d'air est assurée par un fonctionnement séquentiel qui, lorsqu'une (ou les) bouche(s) alimentant une pièce principale se ferme(nt) sous l'influence des moyens de mesure de la température et donc lorsque la quantité d'air neuf introduite dans la pièce considérée devient trop faible, permet de compenser en un temps très court le déficit d'air neuf dans cette pièce suivant le processus suivant :
1) si toutes les bouches principales sont ouvertes (demande générale de chaud ou de froid). L'air neuf est équitablement réparti dans chaque pièce principale en fonction du débit nominal des bouches principales.
2) si une ou plusieurs bouches sont fermées : l'unité centrale de gestion analyse le temps pendant lequel chaque bouche est restée fermée, et au bout d'un laps de temps déterminé par ladite unité, commande la fermeture des bouches préalablement ouvertes et l'ouverture de chaque bouche préalablement fermée, de façon à introduire dans les pièces concernées un débit d'air neuf équivalent à l'apport d'air neuf durant la fermeture des bouches.

Un tel fonctionnement séquentiel permet d'assurer constamment et quelle que soit la saison, la gestion du renouvellement d'air pièce par pièce, en conformité avec les législations en vigueur, c'est-à-dire permet d'introduire l'air neuf dans le local dans toutes les pièces principales suivant le besoin de chacune desdites pièces.

(Il est à noter qu'on entend définir, dans la présente demande, par les termes "bouches de soufflage", soit des bouches classiques avec motorisation à l'arrière desdites bouches, soit des volets motorisés disposés en amont d'une grille de soufflage montée sur une gaine. De plus, on entend définir par les termes "évacuation d'air vicié", soit des systèmes consistant à injecter l'air neuf dans les pièces principales, de façon à conduire à une mise en pression de ces dernières amenant l'évacuation de l'air vicié pour tout orifice adapté, soit de façon plus classique, à des systèmes d'extraction mécanique ou manuelle. A titre de simplification, le terme "évacuation" sera, en outre, remplacé par le terme "extraction" dans la majeure partie du texte de cette demande).

Selon un mode de mise en oeuvre préférentiel, l'unité générale de gestion est programmée, dans sa configuration de gestion d'air neuf, pour commander l'unité extérieure et/ou la (ou les) unité(s) intérieure(s) de façon que la température de l'air mélangé soufflé avoisine la température de consigne de chaque pièce initialement fermée. On évite ainsi de perturber la température ambiante de la ou des pièces concernées.

Selon une autre caractéristique de l'invention :
. on utilise des bouches de soufflage dotées d'un conduit de soufflage principal comportant un volet d'obturation commandé par les moyens de motorisation, et un conduit annexe de section réduite,
. dans la configuration de gestion de la température des pièces principales de l'unité principale de gestion, et dans l'hypothèse où toutes les bouches de soufflage sont fermées, on assure une répartition équitable de l'air dans toutes les pièces principales par l'intermédiaire des conduits annexes des bouches de soufflage.

Dans l'hypothèse où toutes les bouches principales sont fermées (température de consigne atteinte dans toutes les pièces), l'air neuf est ainsi équitablement réparti grâce au conduit annexe des bouches principales qui est, en outre, dimensionné pour conserver la portée du jet de façon à éviter tout inconfort et à conserver le balayage de la pièce.

De plus, et de façon avantageuse, lorsque toutes les bouches de soufflage sont fermées, l'unité principale de gestion commande les moyens de ventilation de chaque unité intérieure de façon que ces derniers délivrent un débit minimal de mélange air neuf/repris par l'intermédiaire du conduit annexe des bouches de soufflage.

En outre, lorsque toutes les bouches principales sont fermées, l'unité centrale de gestion est également programmée, de façon avantageuse, pour que la température de l'air mélangé soufflé avoisine la température de consigne des pièces principales.

Selon une autre caractéristique de l'invention, on équipe chaque conduit annexe de chaque bouche de soufflage d'un modulateur auto-réglable apte à délivrer un même débit d'air mélangé pour une plage de pressions donnée, et ainsi à éviter tout risque d'inconfort.

Par ailleurs, on équipe avantageusement chaque bouche de soufflage d'une sonde de température faisant office de moyens de mesure de température, pré-asssemblée avec ladite bouche de soufflage et disposée de façon à être balayée par l'air ambiant de la pièce. L'adjonction, pour chaque bouche de soufflage, d'une sonde de température conduit à éviter d'avoir à installer un thermostat dans chaque pièce principale, et abaisse donc le coût en matériel et en main-d'oeuvre.

Selon une autre caractéristique de l'invention, on extrait l'air vicié dans les pièces de service au moyen de bouches d'extraction raccordées à des conduites mises en dépression par un ventilateur.

De plus, au moins une de ces bouches d'extraction, notamment celle située dans la cuisine, est équipée d'un modulateur de débit à commande manuelle autorisant notamment de moduler le débit extrait en fonction de l'occupation et/ou de l'utilisation de la pièce concernée.

De plus, avantageusement, on intègre dans chaque fente des bouches de soufflage, un volet articulé autour d'un axe transversal, et apte à osciller librement depuis une position de fermeture totale ou partielle de ladite fente vers une position d'ouverture totale de ladite fente, en fonction de la pression d'air en amont de cette dernière.

Un tel volet a pour fonction de limiter le débit de fuite délivré par les fentes lorsque les bouches sont fermées car, lorsqu'au moins une bouche de soufflage est ouverte dans le local, la pression d'air en amont des bouches fermées équipées dudit volet s'avère alors insuffisante pour ouvrir ce dernier.

De ce fait, si un ou plusieurs bouches sont fermées, et une ou plusieurs bouches ouvertes, la fente des bouches fermées ne laisse pas passer un débit de fuite susceptible de modifier la température ambiante dans les pièces dont les bouches sont fermées.

L'air neuf est, quant à lui, avantageusement introduit dans le local au moyen d'un conduit doté d'un ventilateur, et on délivre cet air neuf dans chaque unité intérieure au moyen de conduits comportant chacun une bouche d'insufflation à débit modulable permettant d'adapter le débit d'air neuf en fonction du débit d'air extrait.

De plus, en vue d'adapter le débit d'air neuf des bouches d'insufflation au débit d'air extrait, l'unité centrale de gestion est avantageusement reliée à chaque bouche d'extraction à débit modulable et à chacune desdites bouches à insufflation d'air neuf.

Selon une autre caractéristique de l'invention, on équipe l'entrée du conduit d'amenée d'air neuf d'un système de filtration fonction de la pollution extérieure environnante. L'air neuf est ainsi filtré avant son introduction dans le local.

De plus, selon un mode de mise en oeuvre préférentiel :
. on dispose dans le local au moins un capteur de mesure de la qualité de l'air dans ledit local, tel que notamment un capteur d'humidité, de gaz carbonique...,
. on équipe le dispositif d'un capteur externe de mesure de valeurs correspondantes à celles d'un capteur interne, c'est-à-dire notamment capteur d'humidité, de gaz carbonique...,
. on relie la centrale de gestion générale à chaque capteur de mesure, et au capteur externe, et on programme cette dernière de façon à optimiser le débit d'air neuf réellement nécessaire au local.

Il est donc, selon le procédé de l'invention, possible de réguler en fonction des informations transmises par les capteurs externe et interne(s), les débits d'extraction et d'insufflation d'air neuf. Le renouvellement d'air est donc optimisé en fonction des besoins réels dans le logement. En effet, la mesure de la qualité relative entre l'air extérieur et l'air intérieur permet notamment de déterminer le taux d'occupation du local et donc le débit d'air neuf nécessaire.

Ainsi, à titre d'exemple, si des capteurs d'humidité sont utilisés, le procédé consiste :
. à mesurer l'humidité extérieure,
. à calculer l'humidité intérieure correspondant à la température de consigne des pièces principales en prenant comme hypothèse l'absence de production de vapeur dans lesdites pièces principales et donc toute absence d'occupants,
. à mesurer l'humidité réelle dans les pièces principales,
. et en fonction de ces divers mesure et calcul, à moduler le débit d'air neuf en fonction de l'écart obtenu représentatif du taux d'occupation du local.

Selon l'invention, deux solutions avantageuses peuvent être envisagées pour l'optimisation du débit d'air neuf.

Selon une première solution, on équipe le local d'un capteur de mesure unique, l'unité centrale de gestion étant programmée, en fonction de l'information fournie par ledit capteur, pour réguler le débit extrait et le débit d'air neuf insufflé.

Le capteur central mesure alors la qualité moyenne de l'air dans le local, et l'unité centrale de gestion adapte, en fonction de l'information fournie par ce capteur, le débit d'air extrait (bouches d'extraction à débit modulable) et le débit d'air neuf (bouches d'insufflation d'air neuf).

Selon une autre solution :
- on équipe chaque bouche de soufflage d'un capteur de mesure,
- et on programme l'unité centrale de gestion de façon à optimiser le débit d'air extrait et le débit d'air insufflé au niveau de chaque unité intérieure en fonction de :
   . la position du volet d'obturation de la (ou des) bouche(s) de soufflage de chaque pièce,
   . l'information délivrée par chaque capteur représentative du taux de pollution (ou d'occupation) fournie par chaque capteur qui "mesure" le taux de la pollution de la pièce concernée et donc son besoin en air neuf.

Selon cette solution, l'unité centrale de gestion optimise alors les débits d'air neuf et extrait en fonction de l'état d'ouverture de chaque bouche de soufflage et de l'information fournie par chaque capteur qui "mesure" le taux de la pollution de la pièce concernée et donc son besoin en air neuf.

De plus, pour l'une ou l'autre des solutions ci-dessus, l'unité centrale de gestion peut avantageusement être programmée pour restreindre à une valeur minimale le débit d'air neuf si la pollution externe devient supérieure à la pollution interne, de façon à restreindre ces débits d'air neuf à des valeurs limites prédéfinies.

Selon une autre caractéristique de l'invention, l'unité centrale de gestion est conçue pour pouvoir être positionnée dans un mode de gestion dit "fumeur" ou "de forte occupation d'une des pièces principales, dite de "séjour"" durant lequel :
- elle se configure initialement dans une séquence dite "séjour":
   . au début de laquelle elle commande l'ouverture de la (ou des) bouche(s) de soufflage de la pièce de séjour et la fermeture des bouches de soufflage de toutes les autres pièces principales,
   . elle calcule un débit de brassage maximal donné dans la pièce de séjour, et elle commande l'unité intérieure de ladite pièce de séjour de façon à obtenir ce taux de brassage,
   . elle adapte la puissance thermique délivrée par l'unité intérieure de façon à obtenir la température de consigne dans le séjour,
- au bout d'un laps de temps prédéterminé, elle se configure dans une séquence dite "chambres" où :
   . elle commande la fermeture de la (ou des) bouche(s) de soufflage de la pièce de séjour et l'ouverture des bouches de soufflage des autres pièces principales dites chambres,
   . elle calcule le déficit d'air neuf dans les chambres durant la séquence séjour, et commande le maintien de cette séquence "chambres" pendant un laps de temps adapté pour combler ledit déficit d'air neuf,
   . et elle se repositionne dans sa configuration "séjour" une fois ce laps de temps passé.

(Il est bien entendu que par pièce principale dite "de séjour", on entend définir soit la pièce de séjour proprement dite, soit une quelconque des autres pièces principales (bureau, chambre...), au choix des occupants.

Cette caractéristique permet de minimiser le transfert de la pollution d'une pièce fortement occupée et/ou enfumée, telle que le séjour, vers les autres pièces principales sans conduire à un déficit d'apport d'air neuf dans lesdites autres pièces principales.

De plus, durant ce mode de gestion "fumeur" ou "forte occupation de la pièce de séjour", ainsi qu'également en fonctionnement séquentiel normal, la centrale principale de gestion est programmée pour positionner chaque bouche d'extraction et chaque bouche d'insufflation en mode de débit maximal.

Cette disposition vise en premier lieu à optimiser les séquences de déficit d'apport d'air neuf, et en second lieu à assurer une ventilation importante de la pièce fortement occupée ou enfumée.

Par ailleurs, et de façon avantageuse, durant le mode de gestion "fumeur" ou "forte occupation de la pièce de séjour", la séquence "chambres" est déclenchée soit au bout du laps de temps prédéterminé, soit si l'écart de la température réelle dans une des chambres et la température de consigne de ladite chambre devient supérieur à une valeur donnée. Cette disposition conduit à éviter un refroidissement trop important des chambres qui peuvent être occupées.

Selon une autre caractéristique de l'invention, l'unité centrale de gestion est programmée pour analyser l'évolution des températures dans chaque pièce principale par rapport aux températures de consignes respectives, pour commander une fermeture de la (ou des) bouche(s) de soufflage d'une des pièces principales en cas de variation anormale de température dans ladite pièce, et pour émettre un signal d'alarme représentatif de cette fermeture.

Cette fonction permet, en effet, de détecter deux phénomènes anormaux :
. maintien en position ouverte d'une fenêtre durant la période de chauffage ou de climatisation,
. dysfonctionnement d'une bouche de soufflage motorisée.

Elle évite ainsi des pertes d'énergie, notamment en cas de fenêtre ouverte, et de plus l'utilisateur est prévenu du dysfonctionnement et peut remédier à ce dernier.

Selon une autre caractéristique de l'invention, l'unité centrale de gestion est programmée, en mode climatisation, pour commander l'extraction et l'insufflation d'un débit d'air vicié et d'air neuf maximaux, lorsque la température extérieure devient inférieure aux températures de consigne.

Par ailleurs, on utilise avantageusement un échangeur de chaleur air neuf/air extrait adapté pour assurer un préchauffage ou un prérefroidissement de l'air neuf.

Selon une autre caractéristique de l'invention, l'unité centrale de gestion comprend des commandes manuelles aptes à permettre à l'utilisateur de définir plusieurs caractéristiques de fonctionnement telles que :
. définition d'au moins deux types de températures de consigne pour chaque pièce principale telles que température de confort ou température réduite,
. définition de manière journalière ou hebdomadaire et par pas horaire de la température de consigne pour chaque pièce principale telle que température hors gel, température de confort, température réduite....

Le procédé ci-dessus décrit peut être utilisé pour le chauffage et/ou la climatisation d'un local isolé tel qu'une maison individuelle. Il est toutefois avantageusement destiné au chauffage et/ou la climatisation de plusieurs locaux tels que logements collectifs, bureaux, chambres d'hébergement....

Dans ce cas, en outre, chaque local peut être équipé d'une unité extérieure, ou il peut être utilisé une unité extérieure centralisée pour l'ensemble des locaux. De plus, on entend définir dans ce cas par le terme "local", soit un logement classique, soit un ensemble de bureaux d'un immeuble, soit un groupe de chambres d'hôtel ou l'hôtel complet lui-même.

L'invention s'étend à un dispositif de chauffage et/ou de climatisation d'un local comportant au moins une pièce de service et au moins deux pièces principales, comprenant :
. une unité extérieure et au moins une unité intérieure, l'unité extérieure comportant des moyens de régulation à puissance variable et un échangeur, et chaque unité intérieure comprenant une reprise d'air, des moyens de ventilation à débit et puissance variables et un échangeur, et étant adaptée pour assurer le chauffage et/ou la climatisation d'au moins deux pièces principales,
. des moyens d'évacuation d'air vicié,
. des moyens d'introduction d'air neuf au niveau des reprises de chaque unité intérieure,
. des moyens de mélange air neuf/air repris dans chaque unité intérieure en amont de l'échangeur de cette dernière,
. des moyens de soufflage du mélange air neuf/air repris consistant dans chaque pièce principale en une ou plusieurs bouches de soufflage alimentées par au moins une unité intérieure, et associée(s) chacune à des moyens de motorisation aptes à modifier la position d'ouverture desdites bouches,
. des moyens de mesure de la température dans chaque pièce principale auxquels sont associés les moyens de motorisation de la (ou des) bouche(s) de soufflage de ladite pièce principale, et adaptés pour permettre d'obtenir une température de consigne dans ladite pièce.

Selon l'invention, ce dispositif de chauffage et/ou de climatisation comprend une unité centrale de gestion reliée à l'unité extérieure, à chaque unité intérieure et aux moyens de motorisation des bouches de soufflage, ladite unité centrale de gestion étant programmée pour :
- soit se configurer dans un mode de gestion des températures des pièces principales durant lequel :
   . elle commande les unités extérieure et intérieure(s) et les moyens de motorisation des bouches de soufflage en fonction des informations reçues de moyens de mesure de température, de façon à maintenir la température de consigne dans chaque pièce principale,
   . elle relève la position des moyens de motorisation de chaque bouche de soufflage de façon à détecter l'éventuelle fermeture totale de la (ou de toutes les) bouche(s) alimentant une pièce principale,
- et dans l'hypothèse où toutes les bouches alimentant au moins une pièce principale sont fermées à se configurer dans un mode de gestion d'air neuf durant lequel :
   . elle mesure le temps de fermeture de la (ou desdites) bouche(s) fermée(s),
   . au-delà d'un temps de fermeture de la (ou desdites) bouche(s) supérieur à un seuil prédéterminé, elle calcule le déficit d'apport d'air neuf dans chaque pièce non alimentée, et commande les moyens de motorisation de toutes les bouches de soufflage, de façon à ouvrir chaque bouche de soufflage initialement fermée, et à fermer les bouches de soufflage des autres pièces initialement ouvertes, et ce, pendant un laps de temps adapté pour combler le déficit d'apport d'air neuf dans chaque pièce non initialement alimentée,
   . et à se reconfigurer en mode de gestion de température dans les pièces principales une fois le déficit d'apport d'air neuf comblé.

De plus, l'unité centrale de gestion est avantageusement programmée dans sa configuration de gestion d'air neuf, pour commander l'unité extérieure et/ou la (ou les) unité(s) intérieure(s) de façon que la température de l'air mélangé soufflé avoisine la température de consigne de chaque pièce initialement fermée.

Selon une autre caractéristique de l'invention :
. chaque bouche de soufflage comprend un conduit de soufflage principal comportant un volet d'obturation commandé par les moyens de motorisation, et un conduit annexe de section réduite,
. l'unité centrale de gestion est programmée, dans sa configuration de gestion de température et dans l'hypothèse où toutes les bouches de soufflage sont fermées, pour assurer une répartition équitable de l'air dans toutes les pièces par les conduits annexes des bouches de soufflage.

De plus, les moyens de motorisation des bouches de soufflage sont préférentiellement conçus pour positionner les volets d'obturation dans deux positions correspondant soit à une fermeture totale, soit à une ouverture totale ou partielle des conduits principaux desdites bouches.

Selon une autre caractéristique de l'invention, le conduit annexe de chaque bouche de soufflage est équipé d'un modulateur auto-réglable apte à permettre de délivrer un même débit d'air pour une plage de pressions donnée.

De plus, chaque bouche de soufflage comprend préférentiellement, dans sa fente, un volet articulé autour d'un axe transversal, et apte à osciller librement depuis une position de fermeture totale ou partielle de ladite fente vers une position d'ouverture totale de ladite fente, en fonction de la pression d'air en amont de cette dernière.

Par ailleurs, chaque bouche de soufflage est avantageusement équipée d'une sonde de température, pré-assemblée avec ladite bouche, faisant office de moyen de mesure de température, et disposée de façon à être balayée par l'air ambiant de la pièce, une fois ladite bouche de soufflage installée (phénomène d'induction).

Quant aux moyens d'extraction d'air, ils comprennent avantageusement pour chaque pièce de service une bouche d'extraction reliée à une conduite principale mise en dépression par un ventilateur, au moins une desdites bouches d'extraction étant préférentiellement dotée d'un dispositif de modulation de débit à commande manuelle.

Selon une autre caractéristique de l'invention, les moyens d'introduction d'air neuf comprennent un conduit doté d'un ventilateur adapté pour délivrer cet air neuf dans chaque unité intérieure au droit d'une bouche d'insufflation à débit modulable, de façon à permettre d'adapter le débit d'air neuf au débit d'air extrait.

L'unité centrale de gestion est alors préférentiellement reliée à chaque bouche d'extraction à débit modulable et à chaque bouche d'insufflation d'air neuf, et programmée pour ajuster le débit desdites bouches d'insufflation, de façon à adapter le débit d'air neuf en fonction du débit d'air extrait.

Selon une autre caractéristique de l'invention, le dispositif comprend. un système de filtration intégré dans le conduit d'amenée d'air neuf et fonction de la pollution externe environnante.

De plus, ce dispositif comprend avantageusement :
. au moins un capteur de mesure de la qualité de l'air dans le local, tel que notamment capteur d'humidité, capteur de gaz carbonique...,
. un capteur de pollution externe de mesure de valeurs correspondantes à celles d'un capteur interne, c'est-à-dire capteur d'humidite, capteur de gaz carbonique...,
. l'unité centrale de gestion générale étant reliée aux différents capteurs externe et interne(s), et programmée pour optimiser le débit d'air neuf réellement nécessaire.

Dans ce cas, et selon une première solution avantageuse, ce dispositif comprend un capteur interne de mesure unique, l'unité centrale de gestion étant programmée pour réguler le débit d'air extrait et le débit d'air neuf en fonction de l'information fournie par ledit capteur.

Toujours dans ce cas et selon une seconde solution avantageuse :
. chaque bouche de soufflage est équipée d'un capteur de mesure,
. l'unité centrale de gestion est programmée de façon à optimiser le débit d'air extrait et le débit d'air neuf au niveau de chaque unité intérieure en fonction de :
   . la position du volet d'obturation de la (ou des) bouche(s) de soufflage de chaque pièce,
   . l'information délivrée par chaque capteur dans la pièce concernée représentative de son besoin en air neuf.

Selon une autre caractéristique de l'invention, l'unité centrale de gestion est conçue pour pouvoir être positionnée dans un mode de gestion dit "fumeur" ou "de forte occupation d'une des pièces principales" dite de "séjour" durant lequel :
- elle se configure initialement dans une séquence dite "séjour" au début de laquelle elle commande l'ouverture de la (ou des) bouche(s) de soufflage de la pièce de séjour et la fermeture des bouches de soufflage de toutes les autres pièces principales,
   . elle calcule un débit de brassage maximal donné dans la pièce de séjour, et elle commande l'unité intérieure de ladite pièce de séjour de façon à obtenir ce taux de brassage,
   . elle adapte la puissance thermique délivrée par l'unité intérieure, de façon à obtenir la température de consigne dans le séjour,
- au bout d'un laps de temps prédéterminé, elle se configure dans une séquence dite "chambres" où :
   . elle commande la fermeture de la (ou des) bouche(s) de soufflage de la pièce de séjour et l'ouverture des bouches de soufflage des autres pièces principales dites chambres,
   . elle calcule le déficit d'air neuf dans les chambres durant la séquence séjour, et commande le maintien de cette séquence "chambres" pendant un laps de temps adapté pour combler le déficit d'air neuf calculé,
   . et elle se repositionne dans sa configuration "séjour" une fois ce laps de temps passé.

Par ailleurs, selon une autre caractéristique de l'invention, l'unité centrale de gestion est programmée pour analyser l'évolution des températures dans chaque pièce principale par rapport aux températures de consignes respectives, pour commander une fermeture de la (ou des) bouche(s) de soufflage d'une des pièces principales en cas de variation anormale de température dans ladite pièce, et pour émettre un signal d'alarme représentatif de cette fermeture.

Comme précédemment cité, un tel dispositif de chauffage et/ou de climatisation peut être utilisé pour un local individuel tel qu'une maison d'habitation. Il est toutefois également destiné au chauffage et/ou la climatisation de plusieurs locaux tels que logements collectifs, bureaux, chambres d'hébergement...., comprenant soit une unité extérieure par local, soit une unité extérieure centralisée.

D'autres caractéristiques, buts et avantages de l'invention ressortiront de la description détaillée qui suit en référence aux dessins annexés qui en représentent à titre d'exemples non limitatifs deux modes de réalisation préférentiels, ainsi que deux variantes de bouches de soufflage et deux variantes de bouches d'extraction. Sur ces dessins :
- la figure 1 est une coupe verticale partielle d'un immeuble collectif représentant un logement de l'étage supérieur dudit immeuble équipé d'un dispositif de chauffage et/ou de climatisation comprenant une unité extérieure par logement,
- la figure 2 est une coupe similaire à celle de la figure 1 selon laquelle chaque logement est équipé de dispositifs de chauffage et/ou de ventilation comprenant une unité extérieure centralisée,
- la figure 3 est une vue en plan d'un logement avec terrasse équipé d'un dispositif conforme à l'invention comportant une unité extérieure individualisée,
- la figure 4 est une coupe partielle par un plan longitudinal vertical axial d'une première variante de bouche de soufflage conforme à l'invention,
- la figure 5 est une coupe partielle par un plan longitudinal vertical axial d'une seconde variante de bouche de soufflage conforme à l'invention,
- les figures 6a et 6b sont respectivement une coupe schématique par un plan axial longitudinal et une vue frontale d'une première variante de bouche d'extraction selon l'invention,
- les figures 7a et 7b sont respectivement une coupe schématique par un plan axial longitudinal, et une vue frontale d'une deuxième variante de bouche d'extraction selon l'invention,
- et les figures 8a à 8k représentent les algorithmes de fonctionnement d'une installation conforme à l'invention.

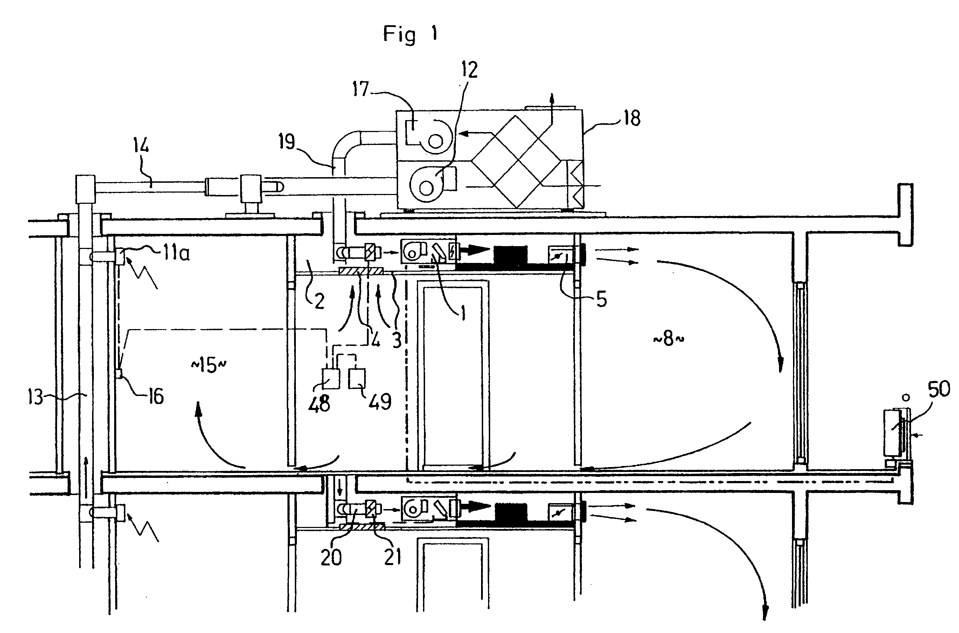

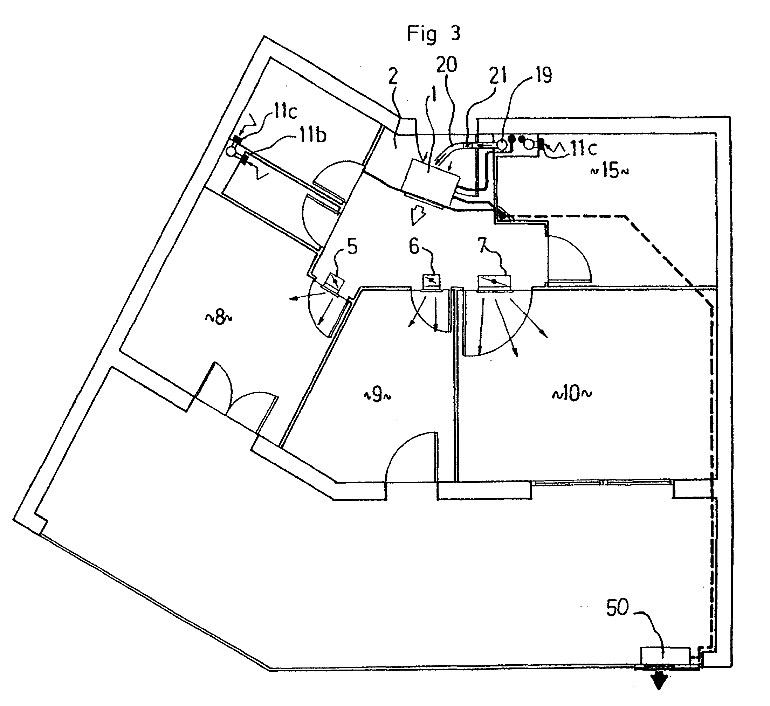

Les installations de chauffage et/ou de climatisation représentées aux figures 1 à 3 sont dérivées de celle décrite dans le brevet FR-2 703 761 en ce qu'elles comprennent chacune une unité intérieure 1 disposée dans un plénum de reprise 2 avec trappe d'accès, délimité par un faux-plafond 3, et doté d'une grille de reprise 4 ménagée dans ledit faux-plafond et de grilles de soufflage telles que 5, 6, 7 (représentées à la figure 3) pour la distribution d'air dans chacune des pièces principales telles que les chambres 8,9 et le séjour 10 (figure 3).

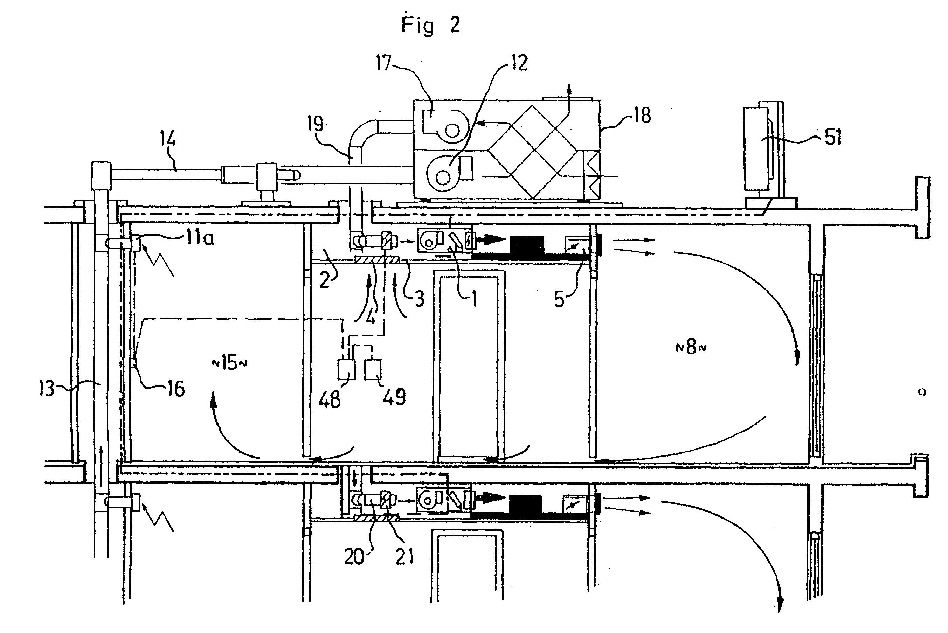

Selon l'invention, toutefois, cette installation diffère, en premier lieu, de celle décrite dans le brevet RIBO en ce que l'unité intérieure et l'unité extérieure individuelle (50 figure 1) et centralisée (51 figure 2) sont des unités de production à puissance variable.

De plus, toutes les bouches de soufflage telles que 5, 6, 7 sont des bouches motorisées telles que décrites ci-après prévues pour permettre de faire varier le débit de soufflage dans les pièces d'un débit maximal (réglé lors de l'installation) à un débit de fuite très réduit (de l'ordre de 15 à 20 m3/h).

Ces installations diffèrent enfin et surtout de celle décrite dans le brevet RIBO en ce qu'elles sont adaptées pour assurer la gestion du renouvellement d'air neuf dans chaque pièce principale 8, 9, 10, des logements.

Ces installations comprennent en premier lieu un ensemble d'extraction d'air vicié constitué de bouches d'extraction telle que 11a, 11b, 11c, situées dans les pièces de service (cuisine, salle de bains, toilettes...) raccordées à un ventilateur 12 par un réseau de conduites montantes telles 13 et horizontales telles que 14 situées sur la terrasse.

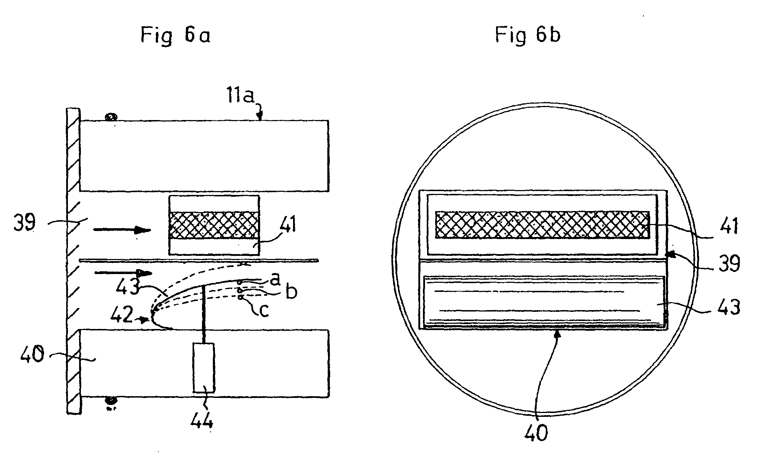

Ces bouches d'extraction 11a, 11b, 11c permettent d'évacuer les débits réglementaires imposés et sont généralement à débit modulable pour la cuisine 15 (voir figures 6a à 7b) et fixe ou modulable pour les autres pièces de service.

A cet effet, la bouche d'extraction à débit modulable 11a est classiquement associée à un interrupteur 16 permettant de sélectionner, soit un débit de croisière, soit un débit de pointe, en fonction de l'occupation et de l'utilisation de la cuisine 15.

Cette installation comprend également un ensemble d'introduction d'air neuf comportant en premier lieu un ventilateur 17 intégré, comme le ventilateur d'extraction 12, dans un échangeur double-flux 18 situé sur la terrasse et permettant de préréchauffer ou prérefroidir l'air neuf.

Cet ensemble d'introduction d'air neuf comprend également une colonne descendante 19 d'insufflation d'air neuf reliée au ventilateur 17, et comportant au niveau de chaque logement une dérivation horizontale 20 débouchant dans le plénum 2 en amont de l'unité intérieure 1 et sur laquelle est montée une bouche d'insufflation 21 à débit d'air modulable.

Il est à noter qu'en variante chaque logement peut être équipé d'un mini-ventilateur monté sur un conduit débouchant respectivement en façade et dans le plénum 2.

Tel qu'indiqué ci-dessus, chaque bouche de soufflage 5, 6, 7 est motorisée et comprend un conduit principal 22 à l'intérieur duquel est disposé un volet de réglage motorisé 23 monté rotatif autour d'un axe transversal axial 24 et pouvant se déplacer sous l'effet des moyens de motorisation (non représentés) soit :
. dans une position de fermeture totale du conduit principal 22 dans laquelle il vient en butée contre un joint périphérique annulaire 25 en vue d'obturer de façon étanche ledit conduit,
. dans une position d'ouverture maximale du conduit principal 22 où il s'étend dans le plan de symétrie horizontal du conduit 22.

Chacune de ces bouches de soufflage 5, 6, 7 présente également de façon classique, une grille de soufflage double déflexion 26, et un contre-cadre 27 permettant de la fixer dans une ouverture ménagée dans une cloison 28.

La première particularité de ces bouches de soufflage 5, 6, 7 réside, en premier lieu, dans le fait qu'elles comprennent, en parallèle avec le conduit principal 22, un conduit annexe 29 de débit de fuite constituant une fente logeant un module 30 de réglage dudit débit de fuite.

A l'intérieur de cette fente 29, et afin de régler initialement le débit de fuite, est disposée une tôle 31 en forme de dièdre obtus dont une des faces 31a est fixée au cadre périphérique de la bouche de soufflage 5 et dont l'autre face 31b est inclinée vers l'intérieur de ladite fente. Grâce à cette tôle 31, le préréglage du débit de fuite peut être effectué au moyen d'une vis 32 venant en appui sur la face 31b de la tôle 31 et permettant d'ajuster son inclinaison et donc la section de la fente 29.

La deuxième particularité de ces bouches 5 réside dans le fait que chaque fente 29 comprend un volet 52 articulé autour d'un axe transversal, et apte à osciller librement depuis une position de fermeture totale ou partielle de ladite fente 29 vers une position d'ouverture totale de ladite fente, en fonction de la pression d'air en amont de cette dernière.

La troisième particularité de ces bouches de soufflage 5, 6, 7 réside dans le fait qu'elles intègrent une sonde de température et éventuellement d'hygrométrie permettant notamment d'éviter l'installation dans chaque pièce d'un thermostat.

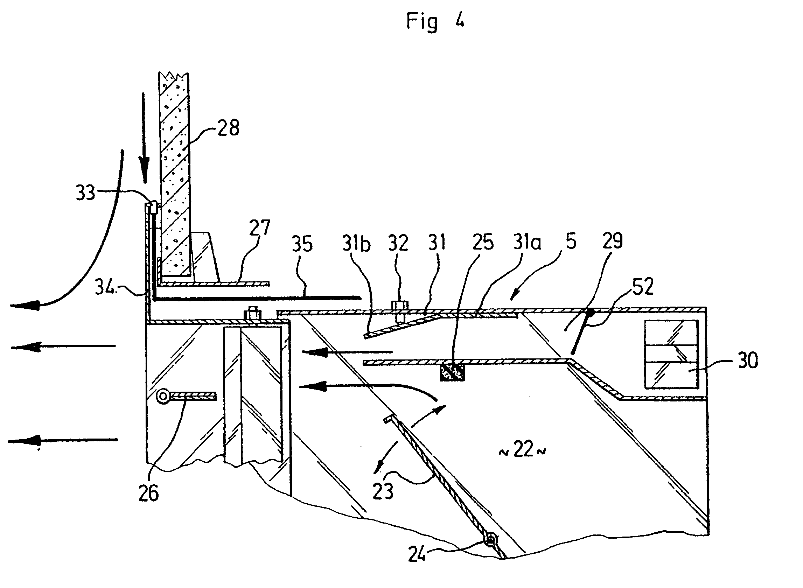

Selon la première variante représentée à la figure 4, cette sonde 33 est agencée pour être disposée au droit de l'extrémité d'une collerette annulaire 34 bordant l'extrémité du cadre de la bouche de soufflage 5, entre ladite collerette et la face externe de la cloison 28.

Tel que représenté à la figure 4, ainsi positionnée, cette sonde 33 est balayée par l'air ambiant entraîné par le jet d'air sortant de la bouche de soufflage 5.

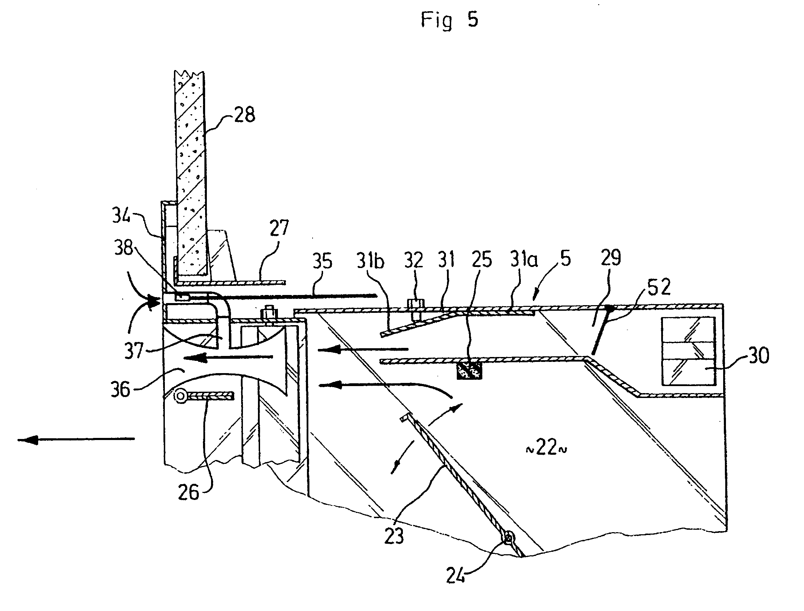

Selon la seconde variante représentée à la figure 5, la bouche de soufflage 5 intègre un système de Venturi 36 (représenté schématiquement) disposé à la sortie de ladite bouche dans le prolongement commun des conduits principal 22 et annexe 29, et un conduit 37 en forme de coude droit dont la branche verticale débouche au niveau du col du système de Venturi 36 et dont la branche horizontale s'étend en direction de l'intérieur de la pièce avec laquelle elle communique.

La sonde de température 38 est quant à elle disposée à l'intérieur de la branche horizontale du conduit 37 de façon que la dépression au niveau du col du système de Venturi 36 aspire l'air ambiant de la pièce qui balaye cette sonde 38.

Enfin, chacune de ces sondes 33, 38 est connecté à un fil électrique 35 de liaison avec une unité centrale de gestion décrite plus loin, conçue pour effectuer une correction de la mesure de la température relevée par lesdites sondes de façon à prendre en compte la hauteur de ces dernières au-dessus du sol.

Par ailleurs, ces bouches de soufflage 5, 6, 7 sont dimensionnées de façon que, en position totalement ouverte du conduit principal 22, et pour une vitesse de sortie d'air de 2 à 2,5 m/s, ce conduit principal 22 présente une perte de charge de 3 à 6 Pascals tandis que la fente 29 présente une perte de charge beaucoup plus importante.

A titre d'exemple, pour une bouche de section de 300 mm x 100 mm convenant pour une chambre de 11 m² :
. le conduit principal 22 a une section dimensionnée pour obtenir un débit de 130 m³/h sous 5-6 Pa,
. la fente 29 est dimensionnée pour obtenir un débit de 40 m³/h sous 20 Pa, avec une section dimensionnée pour que la vitesse soit de 2 à 2.5 m/s à la sortie. Sous 5 Pa, cette fente 29 laissera passer un débit d'environ 20 m³/h.

Selon ce principe, lorsque aucune pièce principale n'est en demande de chaud ou froid, les volets motorisés 23 sont en position fermée. L'unité centrale de gestion décrite ci-après réduit la vitesse de rotation du ventilateur de l'unité intérieure 1 et fixe donc le débit brassé par cette dernière à la valeur suivante selon le type de logement :

| | T1 | T2 | T3 | T4 | T5 |
|---|---|---|---|---|---|
| Q brassé en m³/h | 80 | 120 | 160 | 200 | 240 |

Les fentes autoréglables 29 assurent alors la mise en pression du plénum (20 Pa). Ainsi, le débit insufflé dans chaque pièce est maîtrisé (équilibrage du réseau aéraulique) et une bonne répartition de l'air neuf est assurée. De plus, la vitesse de 2 à 2.5 m/s à la sortie de la fente 29 assure une portée correcte du jet et ainsi un balayage total de la pièce par l'air neuf.

Par ailleurs, à titre d'exemple, dans le séjour 10, la bouche de soufflage 7 possède une fente 29 dimensionnée pour obtenir sous 20 Pa un débit de 80 m³/h (module 80). Dans les autres pièces (chambres, bureau), la fente 29 de la bouche de soufflage 5, 6 est dimensionnée pour débiter 40 m³/h sous 20 Pa (module 40).

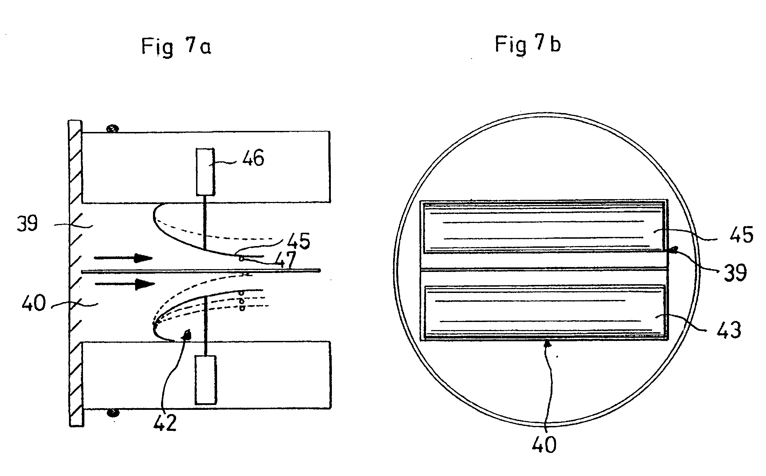

Tel qu'indiqué ci-dessus, les bouches d'extraction 11a disposées dans les cuisines 15 sont à débit modulable. Tel que représenté aux figures 6a, 6b, 7a et 7b, ces bouches d'extraction comprennent chacune deux conduits longitudinaux superposés 39, 40 consistant, l'un, supérieur 39 en un conduit de débit de croisière, et l'autre, inférieur 40, en un conduit de débit de pointe.

En outre, deux variantes de bouches d'extraction sont représentées respectivement aux figures 6a-6b et 7a-7b.

Selon les figures 6a, 6b, la bouche d'extraction 11a représentée est conçue pour obtenir deux débits d'extraction à savoir un débit de croisière fixe et un débit de pointe modulable.

A cet effet, le conduit de croisière 39 loge un module 41 de réglage du débit de croisière. Le conduit de pointe 40 intègre quant à lui un volet motorisé 42 commandé par l'interrupteur 16 et consistant de façon connue en soi en une lame flexible 43 incurvée reliée à l'axe de rotation d'un moteur 44 apte à permettre d'infléchir la courbure de cette lame et donc la section de passage du conduit de pointe 40 entre deux positions de butée correspondant à :
. une inflexion minimale de la lame 43 où celle-ci obture le conduit de pointe 40,
. une inflexion maximale de la lame définie par une butée telle que a, b, c, fonction du type d'appartement traité.

A titre d'exemple, est représenté ci-dessus un tableau des débits d'extraction d'une telle bouche et la position de la butée de réglage pour divers types de logements :

| LOGEMENT | T1 | T2 | T3 | T4 | T5 et plus |
|---|---|---|---|---|---|
| EXTRACTION CUISINE | | | | | |
| Débit de croisière | 20 | 30 | 45 | 45 | 45 |
| Débit volet motorisé (Sous 80 Pa) | 55 | 60 | 60 | 75 | 90 |
| Position de réglage | a | a | a | b | c |

Selon les figures 7a et 7b, la bouche d'extraction 11a représentée est conçue en outre pour permettre de moduler le débit de croisière en fonction de la pollution dans le logement.

A cet effet, le conduit de pointe 40 comporte un volet motorisé 42 similaire à celui ci-dessus décrit.

Le conduit de croisière 39 intègre quant à lui un volet motorisé 45 similaire au volet 42 et actionné au moyen d'un moteur pas à pas 46, ledit volet motorisé 45 étant adapté pour être asservi à une sonde ou un capteur représentatif de l'occupation (humidité, gaz carbonique,...) et étant associé à une butée 47 déterminant le débit minimal (de l'ordre de 15 m³/h sous 100 Pa).

Selon cette variante, en outre, deux types de fonctionnement du volet 45 du conduit de croisière 39 peuvent être envisagées :
. soit un positionnement modulable du volet 45 en fonction de la pollution du local,
. soit un fonctionnement tout ou rien avec asservissement des temps de fermeture et d'ouverture à un capteur de mesure de la pollution du local.

Il est à noter, en outre, que les systèmes de bouches d'extraction tels que décrits ci-dessus peuvent être également utilisés pour réaliser les bouches d'insufflation 21.

L'installation conforme à l'invention comporte par ailleurs une unité centrale 48 déjà citée plus haut de gestion de l'ensemble du fonctionnement de cette installation. A cet effet, cette unité centrale de gestion 48 comporte plusieurs entrées permettant à partir des différents paramètres délivrés vers ces entrées de réguler les différentes sorties dont elle est pourvue.

Selon l'invention, les différentes entrées sont respectivement reliées :
. aux sondes de température 33, 38 des différentes bouches de soufflage 5, 6, 7,
. à l'éventuel capteur de pollution dans l'hypothèse d'un désir d'optimisation des débits d'air neuf,
. à des capteurs de mesure de la température de l'air soufflé en sortie de chaque unité intérieure 1,
. à un capteur de température extérieure,
. à un thermostat 49 de mesure de la température de l'air repris,
. à des capteurs de mesure de la vitesse de l'air soufflé en sortie des unités extérieures 1 destinés à vérifier le débit d'air obtenu.

De plus, une entrée permet de choisir, soit un mode de ventilation sélectionné par l'utilisateur, soit un mode de fonctionnement automatique.

Au niveau des sorties, cette unité centrale de gestion 48 est reliée :
. aux moyens de motorisation des volets motorisés 23 de chaque bouche de soufflage 5, 6, 7,
. aux bouches d'insufflation 21 des unités intérieures 1,
. à l'interrupteur 16 de commande de la bouche d'extraction 11 a de la cuisine 15,
. aux ventilateurs des unités intérieures 1,
. aux moyens de régulation (non représentés) de la puissance des unités intérieures 1,
. à des convecteurs non représentés disposés dans les pièces techniques.

Une telle unité centrale de gestion est programmée pour assurer les fonctions suivantes :
1) Programmation journalière ou hebdomadaire pièce par pièce
   A cet effet, l'utilisateur peut définir pour chaque pièce au moins deux températures de consigne :
   - température de confort,
   - température réduite.

   Il peut définir ensuite, par pas horaire et pour chaque pièce, la consigne désirée de manière journalière ou hebdomadaire :
   - hors gel,
   - confort,
   - réduit
2) Résulation thermique pièce par pièce
   En fonction de l'écart entre la consigne désirée à un instant t et la mesure relevée par la sonde 33, 38 disposée dans chaque bouche de soufflage 5, 6, 7 de chaque pièce principale 8, 9, 10, réguler et commander :
   . la position de chaque volet motorisé 23 (ouvert/fermé),
   . déterminer et commander la vitesse de rotation du ventilateur de l'unité intérieure 1 de façon à fixer le débit brassé soit :
      - en fonction des données transmises par une sonde de vitesse ou de pression,
      - en fonction de la position de chaque volet motorisé 23 (ouvert/fermé),
   . réguler la puissance (chaud ou froid) :
      - du groupe à puissance variable (par exemple vanne 3 voies dans le cas d'une production centralisée),
      - des batteries électriques d'appoint (régulation proportionnelle par Triac).

   La température de l'air soufflé par ailleurs peut être régulée soit :
   . en fonction des besoins mesurés dans les pièces principales (écart et évolution des températures relevées et des températures de consigne),
   . en fonction de la température extérieure (affichage d'une pente).
3) Gestion du renouvellement d'air neuf (insufflation et extraction
   A cet effet, l'unité centrale de gestion 48 assure :
   - la gestion de la bouche d'extraction 11a en cuisine 15 (à 2 débits fixe ou modulant),
   - la gestion de l'insufflation d'air neuf dans les pièces principales 8, 9, 10 de façon permanente et quasi-constante (sur une période globale d'une heure), quel que soit le mode de fonctionnement (chauffage, climatisation ou mi-saison) grâce au fonctionnement séquentiel :
      . dans le séjour insufflation minimum d'environ 35 m³ d'air neuf par heure,
      . dans les chambres/autres pièces environ 20 m³ d'air neuf par heure.

   De plus, lorsque cette unité centrale de gestion 48 réalise une séquence destinée à combler dans certaines pièces le déficit d'air neuf, elle adapte la puissance à fournir pour obtenir une température de soufflage proche de la température de consigne des pièces. Ainsi, on évite l'inconfort et on ne perturbe pas la température ambiante de la/lesdite(s) pièces.
   Cette unité centrale de gestion 48 permet également à l'utilisateur d'enclencher la ventilation en débit de pointe (période de cuisson...) pour une durée temporisée grâce à l'interrupteur 16 situé dans la cuisine 15.
4) Gestion et optimisation des débits d'air neuf :
   Lorsque l'installation est équipée d'un ou plusieurs capteurs (intérieur et extérieur au logement) de mesure de pollution de l'air (mesure du taux de CO2/H2O/...), l'unité centrale de gestion 48 peut alors en fonction de ces informations réguler l'extraction et l'insufflation d'air neuf. Elle adapte ainsi le renouvellement d'air en fonction des besoins mesurés dans le logement. De plus, par mesure de la pollution extérieure, l'unité 48 peut momentanément réduire l'amenée d'air neuf en cas de pic de pollution.
5) Gestion du renouvellement d'air dans le cas de forts enfumage ou occupation du séjour :
   L'unité centrale de gestion 48 propose à l'utilisateur un cycle "Fumeur - Forte occupation" (décrit de façon détaillée plus loin) qui permet de minimiser le transfert de pollution du séjour 10 vers les chambres 8, 9 et d'assurer un débit d'air neuf insufflé dans le séjour 10 important.
6) Position confinement :
   En logement collectif, dans des lieux de construction à risques (proche d'une usine chimique...), en cas d'alerte, l'unité centrale de gestion 48 stoppe l'extraction et l'insufflation d'air neuf.
7) Régulation et programmation des convecteurs installés dans les pièces de service
8) Lors de la détection d'une température extérieure inférieure à la température intérieure, le module de régulation enclenche le débit (extraction, insufflation) de pointe pour rafraîchir le logement.
9) Contrôle de l'évolution des températures dans chaque pièce :
   Cette fonction "Gestion et autocontrôle thermique des pièces ou locaux" doit permettre de détecter et prévenir 2 phénomènes :
   - ouverture d'une fenêtre durant la période de chauffage ou climatisation (perte d'énergie et consommation électrique inutile),
   - dysfonctionnement d'une bouche de soufflage motorisée.

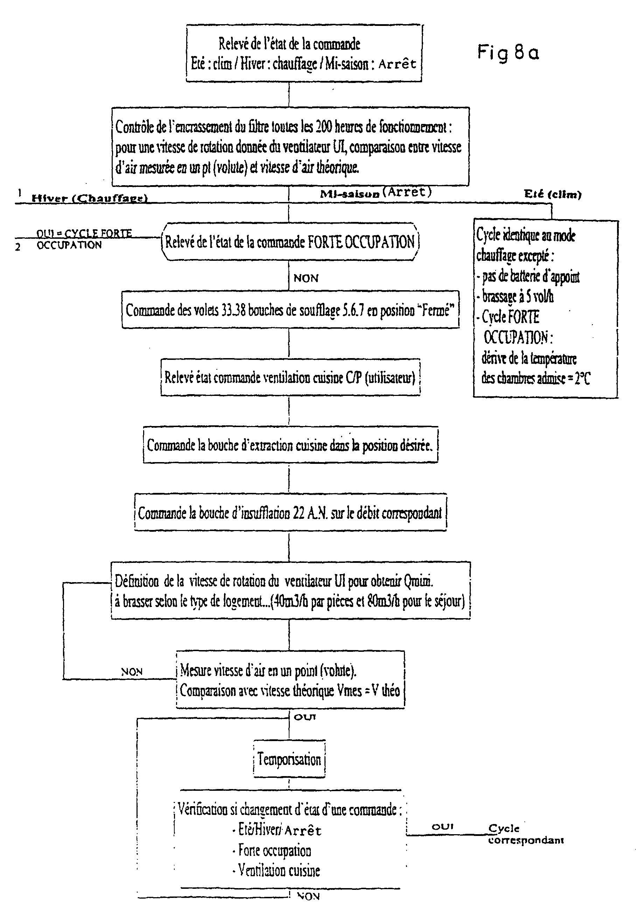

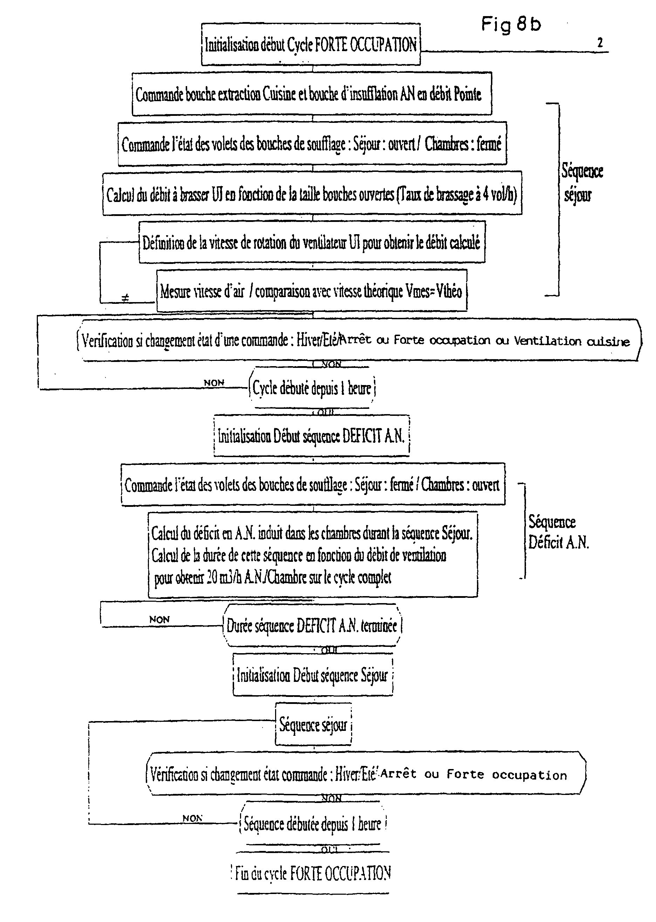

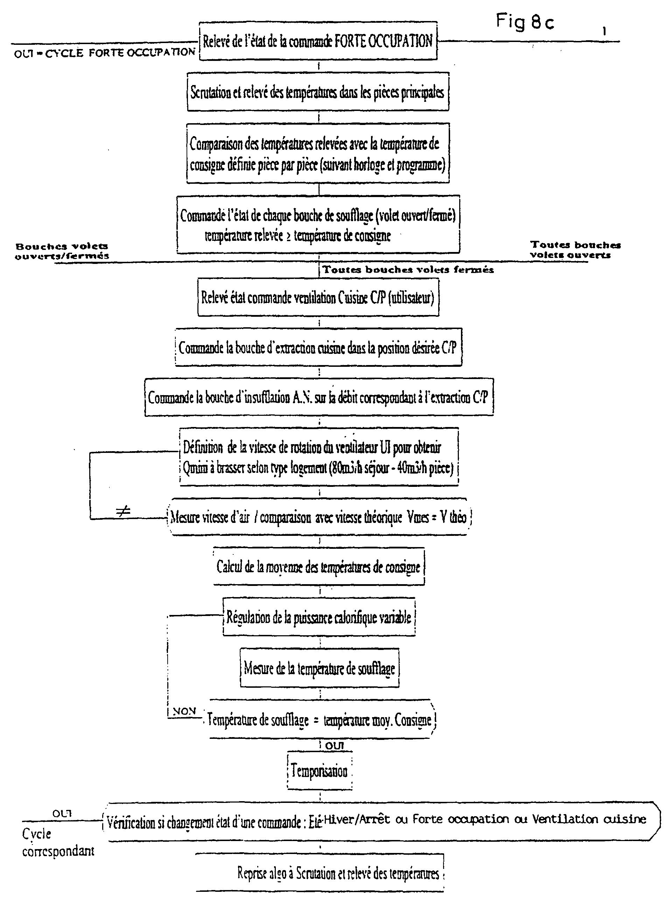

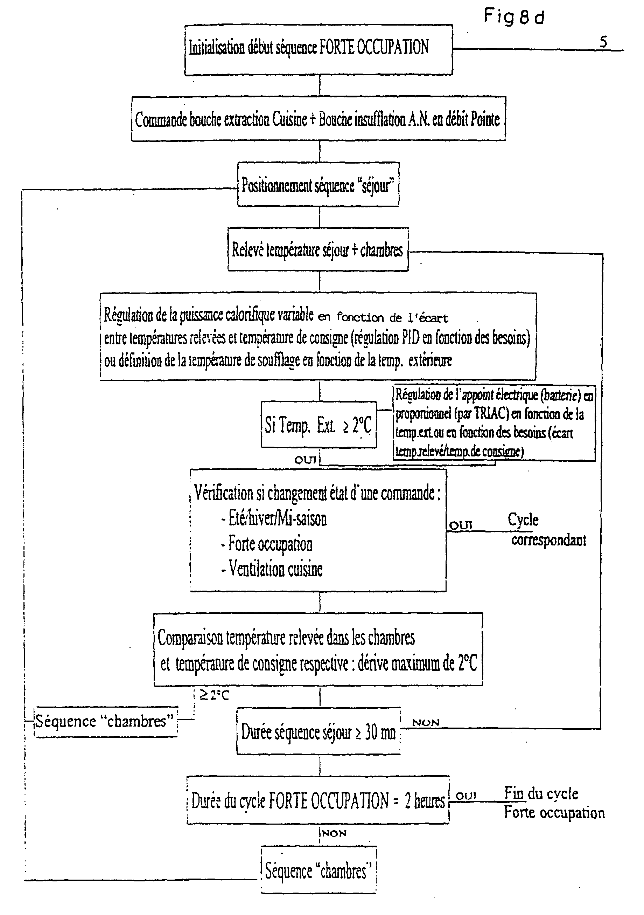

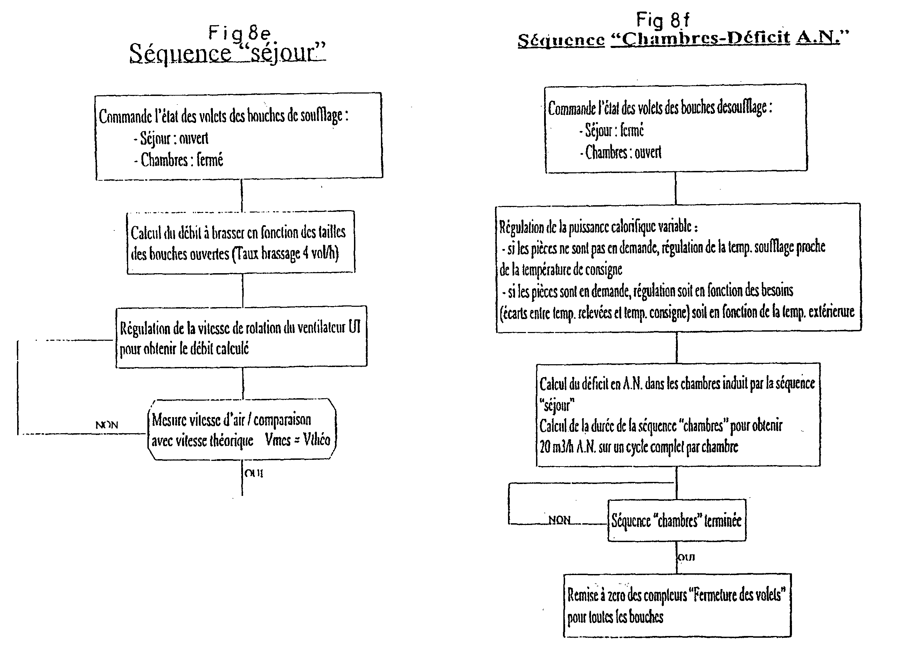

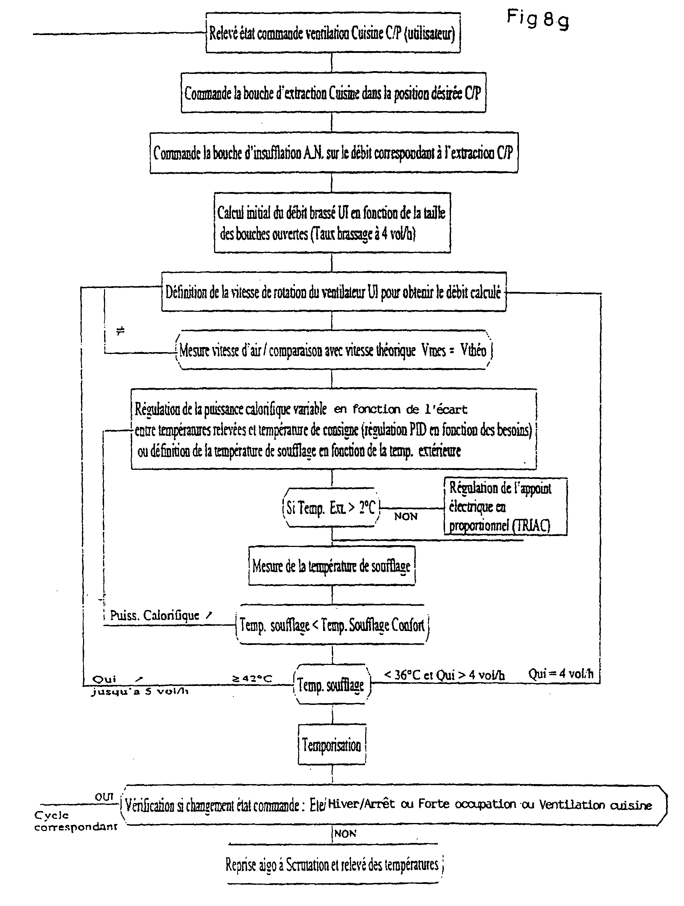

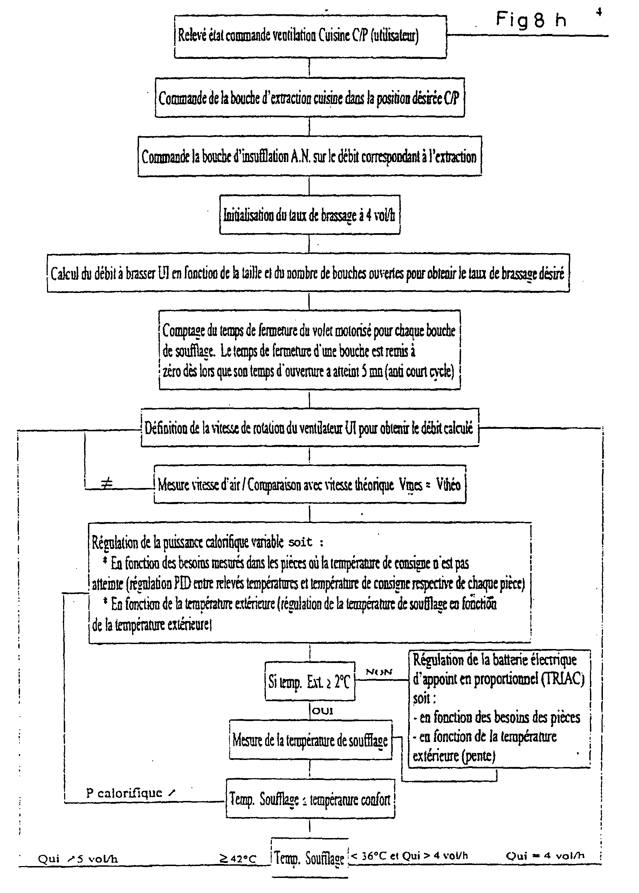

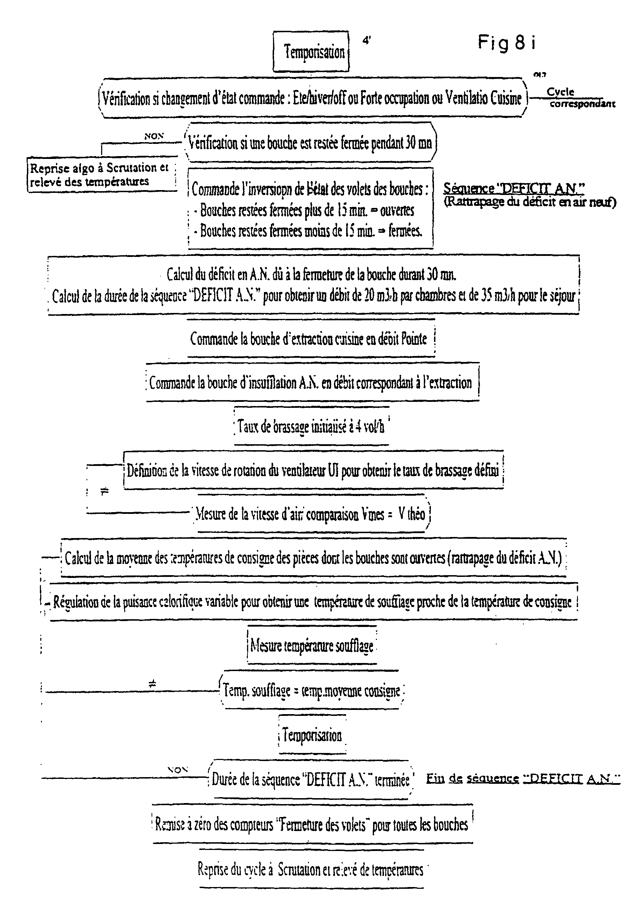

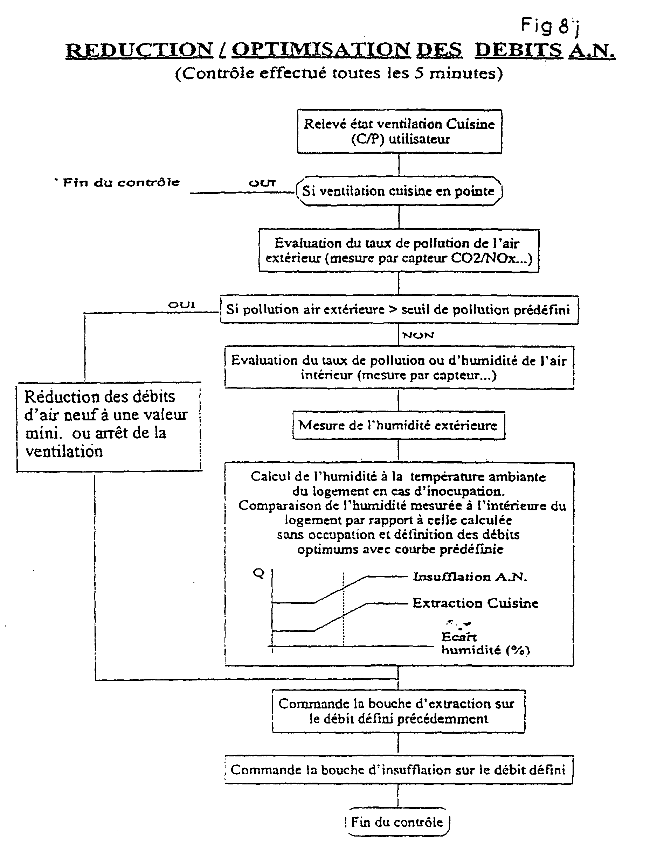

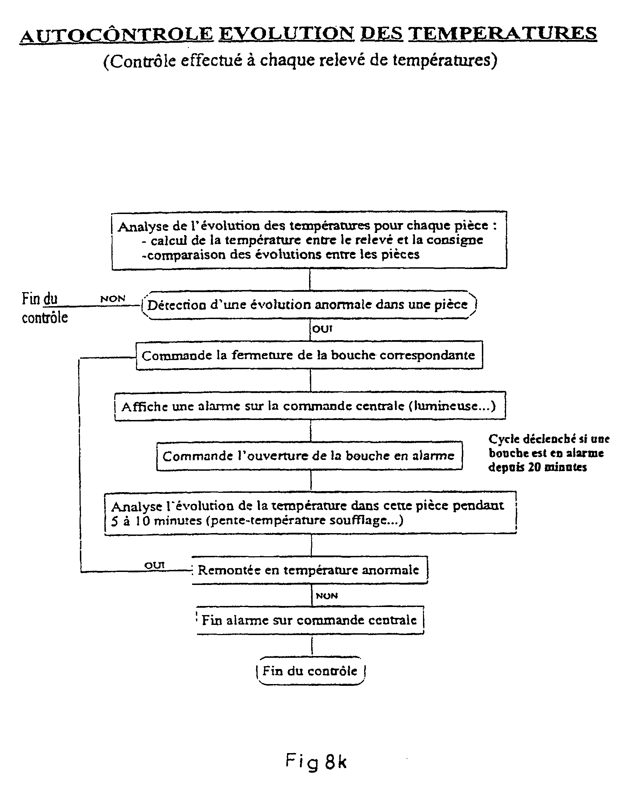

   Cette fonction consiste à analyser l'évolution des températures dans chaque pièce par rapport aux températures de consigne respectives. Si l'unité centrale de gestion 48 détecte une variation anormale de température dans une pièce (ouverture de fenêtre par exemple), la température étant stable dans les autres pièces, elle force la fermeture du volet 23 de la bouche de soufflage 5, 6,7 correspondante de façon à éviter les pertes d'énergie par la fenêtre. De plus, une signalisation apparaît sur l'affichage de l'unité centrale de gestion 48 (fonction "Alarme").
   De plus, dans cette hypothèse et à intervalle de temps régulier (10 à 20 min.), l'unité centrale de gestion 48 tente à nouveau d'atteindre la température de consigne désirée. Elle vérifie alors si la remontée en température permet d'atteindre ou non cette température de consigne. Dans le cas contraire, elle déclenche à nouveau le cycle "Alarme".
   L'algorithme de fonctionnement d'une telle installation est représenté aux figures 8a à 8k.
   Un exemple d'installation conforme à l'invention est décrit ci-après en référencé à un logement de type 3 tel que représenté à la figure 3.

### Bouches de soufflage dans les pièces principales :

Brassage de l'air à 5 vol/h ⇒ dimensionnement des bouches à 2.5 ms

| | **Bouche de soufflage** | **Q soufflé (5vol/h)** |
|---|---|---|
| Séjour | 500x100 | 220 |
| Chambre 1 | 300x100 | 140 |
| Chambre 2 | 300X100 | 140 |

| **EXTRACTION** | | |
|---|---|---|
| **Croisière** | | |
| Cuisine | 45 m3/h | |
| Salle de bains | 30 m3/h | **90 m3/h** |
| WC | 15 m3/h | |
| **Pointe** | | |
| Cuisine | 105 m3/h | |
| Salle de bains | 30 m3/h | **150 m3/h** |
| WC | 15 m3/h | |

L'unité centrale de gestion 48 doit assurer des débits d'insufflation minimum d'air neuf dans les pièces principales 5,6, 7 comparables à ceux d'une entrée d'air classique (sur une période totale d'une heure).

| **INSUFFLATION AIR NEUF** | | |
|---|---|---|
| | Superficie | Q mini Air neuf |
| Séjour | 17 m² | 35 m3/h |
| Chambre 1 | 11 m2 | 20 m3/h |
| Chambre 2 | Il m2 | 20 m3/h |

### DESCRIPTION DU FONCTIONNEMENT DU RENOUVELLEMENT D'AIR

### En débit ventilation croisière

On extrait 90 m3/h. A la reprise de l'unité intérieure 1, la bouche principale d'insufflation 21 est en position 75 m3/h auto régulée (les 15 m3/h manquants sont introduits par la perméabilité du logement).

### Si toutes les bouches de soufflage 5, 6, 7 sont en demande (chaud/froid) ces dernières sont ouvertes

L'unité intérieure brasse environ 500 m3/h (5 vol/h des pièces principales).

L'air neuf est mélangé à l'air recyclé (A.N. 75 m3/h - A.R. 425 m3/h).

L'air neuf est réparti au prorata des dimensions des bouches de soufflage, soit :

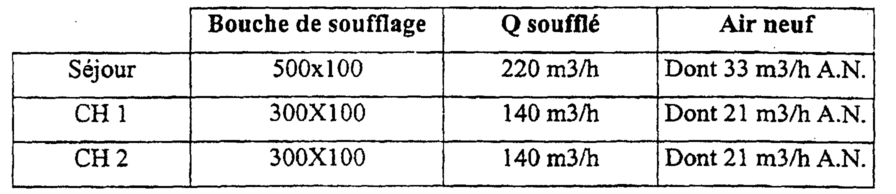

Les bouches de soufflage sont dimensionnées à 2-2.5 m/s. Les portées sont alors adaptées à la pièce à traiter. Le balayage de la pièce par l'air (mélange air neuf/air recyclé) est alors pleinement assuré.

L'unité centrale de régulation 48 adapte la puissance du groupe (chauffage ou frigorifique) en fonction des températures relevées dans les pièces et des consignes affichées (régulation P-PD ou PID).

### Si aucune bouche de soufflage 5,6,7 n'est en demande - ces dernières sont alors fermées.

Il ne reste alors que le fente 19 opérationnelle. Le débit de l'unité intérieure 1 est alors réduit à environ 200 m3/h dont 75 m3/h d'air neuf. Les fentes 29 sont dimensionnées pour obtenir à la sortie une vitesse de 3 à 3.5 m/s. Ainsi les portées sont conservées et le balayage correct de la pièce par l'air neuf est maintenu. La fente 29 équipée d'un organe auto-régulable 30 assure et répartit l'air neuf (plénum sous une pression d'environ 20 Pa).

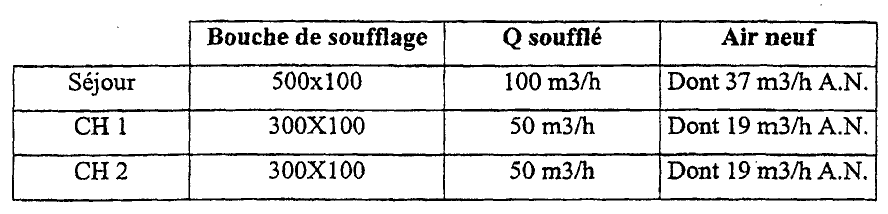

L'unité centrale de gestion 48 adapte la puissance variable pour souffler l'air brassé à une température proche de la température de consigne des pièces (pour ne pas changer la température de consigne et générer d'inconfort).

### Si une ou plusieurs bouches de soufflage 5, 6 , 7 sont fermées et les autres en demande, le fonctionnement est séquentiel.

### Séquence "Pièce en demande" :

L'unité centrale de gestion 48 adapte le débit brassé par l'unité intérieure 1 en fonction du nombre de bouches (et de leur taille) en demande (donc ouvertes). On maintient pour ces pièces un débit de brassage de 5 vol/h en climatisation (4 vol/h en chauffage).

### Exemple : bouche d'une chambre fermée

Débit brassé par l'unité intérieure 1 : 350 m3/h dont 75 m3/h d'air neuf

L'unité centrale de gestion 48 régule la puissance variable en fonction des températures relevées dans les pièces en demande et des consignes désirées (régulation Proportionnelle - Dérivée).

Les bouches de soufflage 5, 6, 7 présentent une perte de charge faible (environ 5-6 Pa) lorsqu'elles sont dimensionnées à 2-2.5 m/s. La fente 29 de la bouche fermée (perte de charge élevée) "récupère" donc un débit de fuite très faible (15 à 25 m³/h dont 21% d'air neuf) suivant son dimensionnement.

### Séquence "récupération déficit Air neuf" :

Si la bouche 5, 6, 7 de la pièce reste fermée pendant une période X minutes (estimée à 30 min), au terme de cette période, pour récupérer le retard (le déficit) d'air neuf dans cette pièce, l'unité 48 ferme alors les bouches qui étaient ouvertes et ouvre la bouche qui était fermée. Elle calcule le déficit en air neuf et optimise la durée de la séquence. Pour raccourcir la durée de la séquence, la grande vitesse d'insufflation (bouche d'insufflation centrale 135 m3/h )est enclenchée. Le déficit manquant est de 8 m3 puisque l'on doit introduire normalement 21 m3/h d'air neuf. La séquence ne durera que 4 min. Pour ne pas générer d'inconfort et modifier la température des pièces, l'unité centrale 48 régule une température de soufflage proche de la température de consigne de la ou des pièce(s) (ou moyenne de consigne) par régulation de la puissance du groupe. Le cycle de chauffage/climatisation reprend ensuite son cours pour les pièces en demande par la séquence "Pièce en demande".

### Régulation et optimisation des débits d'air neuf :

L'unité centrale de gestion 48 peut être équipée d'un capteur qui évalue le taux de pollution de l'air du logement (en fonction de l'hygrométrie, ou du taux de CO2 ou autre...) et adapte le renouvellement d'air neuf nécessaire. Deux types de gestion sont envisagés :
* Régulation Tout ou Rien : au-dessous d'un seuil de pollution, la bouche d'extraction 11a de la cuisine 15 et la bouche d'insufflation 21 sont commandées électriquement pour diminuer les débits (croisière réduite exemple T3 : croisière normale extraction cuisine 45 m3/h, insufflation 75 m3/h).
De plus, en croisière réduite, on réduit les débits à une valeur proche de : extraction cuisine 20 m3/h - insufflation 40 m3/h).
Par ailleurs, lorsque le taux de pollution est au-dessus du seuil, l'unité 48 commande alors les bouches pour obtenir le débit croisière normal.
* Régulation modulante : la bouche d'extraction 11a cuisine 15 et la bouche d'insufflation 21 sont dans ce cas modulables :

| | |
|---|---|
| Extraction cuisine | modulante entre 15-45 m3/h |
| Insufflation | modulante entre 45-75 m3/h |

En fonction du taux de pollution détecté par le capteur, le module électronique adapte la ventilation (taux d'air neuf) la mieux adaptée en faisant varier par exemple en fonction de ce taux de pollution :
- le débit d'air introduit entre 45 m3/h et 75 m3/h,
- le débit d'air extrait dans la cuisine entre 15 m3/h et 45 m3/h.

Par ailleurs, lorsque le débit de pointe est commandé par l'interrupteur 16 placé dans la cuisine 15, l'unité centrale 48 positionne les bouches d'insufflation et d'extraction de façon à obtenir des débits de :
150 m3/h en extraction
135 m3/h en insufflation

On définit alors les fonctionnements comme précédemment et on obtient les débits suivants :

### 1 Toutes les bouches sont ouvertes (en demande)

| Débit brassé U1 | ≈ 500 m3/h | Dont 135 m3/h air neuf |
|---|---|---|
| Séjour | 220 M3/h | Dont 60 m3/h air neuf |
| CH 1 | 140 m3/h | Dont 3 8 m3/h air neuf |
| CH 2 | 140 m3/h | Dont 38 m3/h air neuf |

Le module central adapte la puissance variable en fonction des températures.

### 2 Aucune bouche n'est en demande : bouches volets fermés

| Débit brassé U1 | ≈ 200 m3/h | Dont 135 m3/h air neuf |
|---|---|---|
| Séjour soufflage (fente) | 100 m3/h | Dont 71 m3/h air neuf |
| CH 1 soufflage (fente) | 50 m3/h | Dont 32 m3/h air neuf |
| CH 2 soufflage (fente) | 50 m3/h | Dont 32 m3/h air neuf |

L'unité centrale de gestion 48 régule également la température de soufflage (proche de la température de consigne des pièces) par régulation de la puissance.

### 3) Une ou plusieurs bouches fermées et au moins une en demande : fonctionnement séquentiel

Exemple: si une bouche 5, 6 d'une chambre 8, 9 est fermée, le débit brassé par l'unité intérieure 1 est de 350 m³/h dont 135 m³/h AN. La bouche restée fermée pendant une période de X minutes (estimée à 30 minutes), et l'unité centrale 48 active alors la séquence de "récupération déficit Air Neuf" (inverse l'ouverture des bouches) pendant un temps calculé pour introduire dans la pièce qui était fermée, la quantité d'air neuf suffisante (environ 20 m³ en régime croisière normal). L'unité centrale 48 régule de plus la température de soufflage proche de la température de consigne des pièces.

### 4) Optimisation des débits d'air neuf :

Le capteur de pollution dans ce cas n'a aucune autorité en débit de pointe.

### FONCTIONNEMENT EN POSITION FUMEUR FORTE OCCUPATION -SEJOUR

Le système considéré est un système centralisé. L'air recyclé provient de l'ensemble des pièces principales 8, 9, 10 (pris en vrac dans le couloir). Il est filtré, chauffé ou climatisé. Lorsque le séjour 10 est fortement occupé (repas de famille...), le fonctionnement ci-dessous se propose de minimiser la pollution des autres pièces principales 8, 9 et d'assurer une ventilation importante du séjour 10 pour ces périodes de forte occupation ou de fort enfumage.

A cet effet, lorsque l'unité centrale 48 est informée de la position "Fumeur-Séjour", elle commande une ventilation en débit de pointe (extraction cuisine 150 m³/h - insufflation 135 m³/h). Le régime "Fumeur" est en outre enclenché automatiquement pour une durée maxi de 2 heures.

Pour éviter de transporter les pollutions du séjour vers les chambres 8, 9, le principe (basé sur un fonctionnement séquentiel) consiste à ne pas souffler en même temps dans le séjour 10 et les chambres 8, 9. On souffle donc en priorité dans le séjour 10, les bouches 5, 6 des chambres 8, 9 étant fermées.

On caractérise la fonction séquentielle "Fumeur" par :
- Séquence "séjour" : bouche 7 du séjour 10 ouverte et bouches 5, 6 des chambres 8, 9 fermées,
- Séquence "chambres" : bouche 7 du séjour 10 fermée et bouches 5, 6 des chambres 8, 9 ouvertes.

En outre, lorsque aucune bouche n'est en demande (mi-saison : pas de climatisation), le cycle commence par la séquence "Séjour" : les volets motorisés 23 des chambres 8, 9 se ferment et la bouche 7 du séjour 10 s'ouvre. L'unité centrale 48 détermine la vitesse de rotation du ventilateur de l'unité intérieure 1 de façon à assurer un débit brassé du séjour 10 (environ 4 vol/h).

On obtient ainsi les débits suivants :
- débit brassé par l'unité intérieure 48 : environ 220 m³/h dont 135 m³/h d'AN,
- séjour : Qsoufflé environ 180 m³/h dont 110 m³/h d'AN,
- chambre 1 (volet fermé) : Qsoufflé (fente) environ 20 m³/h dont 13 m³/h d'AN,
- chambre 2 (volet fermé) : Qsoufflé (fente) environ 20 m³/h dont 13 m³/h d'AN.

Ainsi, dans le séjour 10, le débit d'air neuf est important, ce qui assure une bonne qualité de l'air même en cas de forte occupation. Par contre, dans les chambres 8, 9, le taux d'air recyclé est très faible (13 m³/h AN pour 20 m³/h soufflé), ce qui évite de transporter la pollution.

Au bout de 30 minutes, l'unité centrale 48 active la séquence "chambre", c'est-à-dire ferme le séjour 10 et ouvre les chambres 8, 9.

Le calcul du déficit d'air neuf et de la durée de cette séquence est le suivant : débit Air Neuf introduit dans les pièces dont les bouches sont fermées : 20 m³/h - 13 m³/h = 7 m³/h : soit au bout de 30 minutes, un déficit de 3.5 m³ d'air neuf par chambre x 2 chambres, soit 7 m³ Air Neuf et donc avec un débit insufflé d'air neuf de 135 m³/h, durée de la séquence "chambre" environ 3 minutes.

L'unité centrale 48, avec ce fonctionnement séquentiel, rattrape le déficit d'air neuf dans les chambres 8, 9 pour obtenir globalement sur une heure 20 m³ d'air neuf par chambre (comparable à une entrée d'air en façade classique).

### Lorsque l'on est en position Chaud/Froid

Lorsque le cycle "Fumeur" est enclenché, la climatisation des chambres 8, 9 n'est plus assurée à 100 % (durée temporisée de 2 heures) et l'unité centrale 48 enclenche la séquence "séjour" (bouches 5, 6 des chambres 8, 9 fermées (débit de fuite fente 29) et bouche 7 du séjour 10 ouverte) :

Les débits suivants sont obtenus :

| | | |
|---|---|---|
| Séjour | 220 m³/h | dont 110 m³/h AN |
| CH1 | 20 m³/h | dont 13 m³/h AN |
| CH2 | 20 m³/h | dont 13 m³/h AN |

L'unité centrale 48 régule la puissance pour maintenir la température de consigne désirée dans le séjour 10.

Au bout d'une heure du cycle "Fumeur", l'unité centrale 10 active la séquence "chambre" (inverse l'ouverture des bouches) pour récupérer le déficit d'air neuf dans lesdites chambres.

Les débits d'air neuf introduits dans les chambres 8, 9 avec volets fermés sont alors de 13 m³/h.

Ainsi, pour obtenir un débit d'air neuf global de 20 m³/h, les bouches 5, 6 des chambres 8, 9 doivent rester ouvertes pendant : ((7x2)/135)x60≈6 minutes.

Pendant cette séquence, l'unité centrale 48, en fonction des mesures de températures relevées dans les chambres 8, 9, régule la température de l'air soufflé la plus basse possible pour rafraîchir lesdites chambres.

Le cycle "Fumeur" reprend alors son fonctionnement séquence "séjour 10 ouvert et chambres 8, 9 fermées") pour l'heure restante (durée totale maxi 2 heures).

A la fin du cycle "Fumeur", le fonctionnement en climatisation reprend son cours et les températures des chambres 8, 9 sont à nouveau régulées en fonction des consignes.

Par ailleurs, en hiver, l'on autorise la ventilation du séjour 10 en priorité (alternance des séquences), et l'on accorde une chute de température maxi de 2° C dans les chambres 8, 9 par rapport à la consigne. Le cycle "Fumeur" commence par la séquence "séjour" (bouche 7 séjour 10 ouverte, bouches 5, 6, chambres 8, 9 fermées) avec un débit ventilation de pointe (extraction 150 m³/h, insufflation 135 m³/h).

De plus, si aucune chambre 8, 9 n'est en demande de chaud (température pièce inférieure à la température consigne d'au maximum 2° C), la séquence séjour "Fumeur" continue pendant une période maxi Y (estimée à 30 minutes).

La séquence "chambres" est alors déclenchée (bouche 7 séjour 10 fermée, bouches 5, 6 chambres 8, 9 ouvertes) soit pour une température trop faible dans une chambre, soit pour la durée maximale de 30 minutes. La durée de cette séquence est déterminée pour récupérer le déficit en air neuf dans les chambres 8, 9 et pour ramener la température desdites chambres à la consigne.

De plus, l'unité centrale 48 régule le débit soufflé (5 vol/h maxi) et la puissance de l'unité intérieure 1 de façon à atteindre les températures de consigne des chambres 8, 9 le plus vite possible (température de soufflage maxi environ 45° C) afin que la durée de la séquence "chambres" soit la plus courte possible.

## Revendications

1. Procédé de chauffage et/ou de climatisation d'un local comportant au moins une pièce de service (15) et au moins deux pièces principales (8, 9, 10), consistant :
. à utiliser une unité extérieure (50 ; 51) et au moins une unité intérieure (1), l'unité extérieure (50 ; 51) comprenant des moyens de régulation à puissance variable et un échangeur, et chaque unité intérieure (1) comprenant une reprise d'air (2), des moyens de ventilation à débit et puissance variables et un échangeur, et étant adaptée pour assurer le chauffage et/ou la climatisation d'au moins deux pièces principales (8, 9, 10),
. à évacuer un volume donné d'air vicié,
. à amener un volume donné d'air neuf au niveau des reprises d'air (2) de chaque unité intérieure (1),
. à mélanger l'air neuf et l'air repris dans chaque unité intérieure (1) en amont de l'échangeur de cette dernière,
. à souffler le mélange air neuf/air repris réchauffé et/ou refroidi dans chaque pièce principale (8, 9, 10) au travers d'au moins une bouche de soufflage (5, 6, 7) alimentée par une unité intérieure (1), et associée chacune à des moyens de motorisation aptes à permettre de modifier la position d'ouverture desdites bouches,
. et à régler la température dans chaque pièce principale (8, 9, 10) à l'aide de moyens de mesure de température (33 ; 38) auxquels sont associés les moyens de motorisation des bouches de soufflage (5, 6, 7), de façon à obtenir un positionnement de chacune de ces bouches apte à permettre de maintenir à une température de consigne prédéterminée chacune desdites pièces principales,
ledit procédé étant **caractérisé en ce que** l'on utilise une unité centrale de gestion (48) reliée aux unités extérieure (50 ; 51) et intérieure(s) (1), aux moyens de motorisation de chaque bouche de soufflage (5, 6, 7) et aux moyens de mesure de température (33 ; 38), et programmée pour se configurer :
- soit dans un mode de gestion des températures des pièces (8, 9, 10) durant lequel :
. elle commande les unités extérieure (50 ; 51) et intérieure(s) (1) et les moyens de motorisation des bouches de soufflage (5, 6, 7) en fonction des informations reçues les moyens de mesure de température (33 ; 38), de façon à maintenir la température de consigne dans chaque pièce principale (8, 9, 10),
. elle relève la position des moyens de motorisation de chaque bouche de soufflage (5, 6, 7) de façon à détecter l'éventuelle fermeture totale de la (ou de toutes les) bouche(s) alimentant une pièce principale (8, 9, 10),
- et dans l'hypothèse où toutes les bouches (5, et/ou 6, et/ou 7) alimentant au moins une pièce principale (8, et/ou 9, et/ou 10) sont fermées, à se configurer dans un mode de gestion d'air neuf durant lequel:
. elle mesure le temps de fermeture de la (ou desdites) bouche(s) (5, 6, 7) fermée(s),
. au-delà d'un temps de fermeture de la (ou desdites) bouche(s) supérieur à un seuil prédéterminé, elle calcule le déficit d'apport d'air neuf dans chaque pièce (8, 9, 10) non alimentée, et commande les moyens de motorisation de toutes les bouches de soufflage (5, 6, 7), de façon à ouvrir chaque bouche de soufflage initialement fermée, et à fermer les bouches de soufflage des pièces initialement ouvertes, et ce, pendant un laps de temps adapté pour combler le déficit d'apport d'air neuf dans chaque pièce non initialement alimentée,
. et à se reconfigurer en mode de gestion de température dans les pièces principales, une fois le déficit d'apport d'air neuf comblé.

2. Procédé de chauffage et/ou de climatisation selon la revendication 1, **caractérisé en ce que** dans sa configuration de gestion d'air neuf, l'unité principale de gestion (48) commande l'unité extérieure (50 ; 51) et/ou la (ou les) unité(s) intérieure(s) (1) de façon que la température de l'air mélangé soufflé avoisine la température de consigne de chaque pièce principale (8, 9, 10) initialement fermée.

3. Procédé de chauffage et/ou de climatisation selon l'une des revendications 1 ou 2, **caractérisé en ce que** :
. l'on utilise des bouches de soufflage (5, 6, 7) dotées d'un conduit de soufflage (22) principal comportant un volet d'obturation (23) commandé par des moyens de motorisation, et un conduit annexe (29) de section réduite,
. dans la configuration de gestion de la température des pièces principales (8, 9, 10) de l'unité principale de gestion (48), et dans l'hypothèse où toutes les bouches de soufflage (8, 9, 10) sont fermées, on assure une répartition équitable de l'air dans toutes les pièces principales (5, 6, 7) par l'intermédiaire des conduits annexes (29) des bouches de soufflage (5, 6, 7).

4. Procédé de chauffage et/ou de climatisation selon la revendication 3, **caractérisé en ce que** lorsque toutes les bouches de soufflage (5, 6, 7) sont fermées, l'unité principale de gestion (48) commande les moyens de ventilation de chaque unité intérieure (1) de façon que ces derniers délivrent un débit minimal de mélange air neuf/repris par l'intermédiaire du conduit annexe (29) des bouches de soufflage (5, 6, 7).

5. Procédé de chauffage et/ou de climatisation selon l'une des revendications 3 ou 4, **caractérisé en ce que** lorsque toutes les bouches de soufflage (5, 6, 7) sont fermées, l'unité centrale de gestion (1) commande l'unité extérieure (50 ; 51) et/ou la ou (les) unité(s) intérieure(s) (1), de façon que la température de l'air mélangé soufflé avoisine la température de consigne des pièces principales (8, 9, 10).

6. Procédé de chauffage et/ou de climatisation selon l'une des revendications 3 à 5, **caractérisé en ce que** l'on équipe chaque conduit annexe (29) de chaque bouche de soufflage (5, 6, 7) d'un modulateur auto-réglable (30) apte à délivrer un même débit d'air mélangé pour une plage de pressions donnée.

7. Procédé de chauffage et/ou de climatisation selon l'une des revendications 3 à 6, **caractérisé en ce que** l'on intègre dans chaque fente (29) des bouches de soufflage (5, 6, 7), un volet (52) articulé autour d'un axe transversal, et apte à osciller librement depuis une position de fermeture totale ou partielle de ladite fente (29) vers une position d'ouverture totale de ladite fente, en fonction de la pression d'air en amont de cette dernière.

8. Procédé de chauffage et/ou climatisation selon l'une des revendications 3 à 7, **caractérisé en ce que** l'on équipe chaque bouche de soufflage (5, 6, 7) d'une sonde de température (33 ; 38) faisant office de moyens de mesure de température, pré-asssemblée avec ladite bouche de soufflage et disposée de façon à être balayée par l'air ambiant de la pièce.

9. Procédé de chauffage et/ou de climatisation selon l'une des revendications précédentes, **caractérisé en ce que** l'on extrait l'air vicié dans les pièces de service (15) au moyen de bouches d'extraction (11a, 11b, 11c) raccordées à des conduites (13, 14) mises en dépression par un ventilateur (12).

10. Procédé de chauffage et/ou de climatisation selon la revendication 9, **caractérisé en ce que** l'on équipe au moins une des pièces de service (15) d'une bouche d'extraction (11a) dotée d'un modulateur de débit (42) à commande manuelle.

11. Procédé de chauffage et/ou de climatisation selon l'une des revendications précédentes, **caractérisé en ce que** l'on introduit l'air neuf dans le local au moyen d'un conduit (19) doté d'un ventilateur (17), et **en ce que** l'on délivre cet air neuf dans chaque unité intérieure (1) au moyen de conduits (20) comportant chacun une bouche d'insufflation (21) à débit modulable permettant d'adapter le débit d'air neuf en fonction du débit d'air extrait.

12. Procédé de chauffage et/ou de climatisation selon les revendications 10 et 11 prises ensemble, **caractérisé en ce que** l'unité centrale de gestion (48) est reliée à chaque bouche d'extraction à débit modulable (11a) et à chaque bouche d'insufflation d'air neuf (21), et programmée pour ajuster le débit desdites bouches d'insufflation, de façon à adapter le débit d'air neuf en fonction du débit d'air extrait.

13. Procédé de chauffage et/ou de climatisation selon la revendication 12, **caractérisé en ce que** on équipe l'entrée du conduit d'amenée d'air neuf d'un système de filtration fonction de la pollution extérieure environnante.

14. Procédé de chauffage et/ou de climatisation selon l'une des revendications 1 à 12, **caractérisé en ce que** :
. on dispose dans le local au moins un capteur de mesure de la qualité de l'air dans ledit local, tel que notamment un capteur d'humidité, de gaz carbonique...,
. on équipe le dispositif d'un capteur externe de mesure de valeurs correspondantes à celles d'un capteur interne, c'est-à-dire notamment capteur d'humidité, de gaz carbonique...,
. on relie la centrale de gestion générale à chaque capteur de mesure, et au capteur externe, et on programme cette dernière de façon à optimiser le débit d'air neuf réellement nécessaire au local.

15. Procédé de chauffage et/ou de climatisation selon la revendication 14, **caractérisé en ce que** l'on équipe le local d'un capteur de mesure unique, l'unité centrale de gestion (48) étant programmée, en fonction de l'information fournie par ledit capteur, pour réguler le débit extrait et le débit d'air neuf insufflé.

16. Procédé de chauffage et/ou de climatisation selon la revendication 14, **caractérisé en ce que** :
. on équipe chaque bouche de soufflage (5, 6, 7) d'un capteur de mesure,
. et on programme l'unité centrale de gestion (48) de façon à optimiser le débit d'air extrait et le débit d'air insufflé au niveau de chaque unité intérieure (1) en fonction de :
. la position du volet d'obturation (23) de la (ou des) bouche(s) de soufflage (5, 6, 7) de chaque pièce (8, 9, 10),
. l'information délivrée par chaque capteur dans la pièce concernée représentative de son besoin en air neuf.

17. Procédé de chauffage et/ou de climatisation selon l'une des revendications 13 à 16, **caractérisé en ce que** l'unité centrale de gestion (48) est programmée pour restreindre à une valeur minimale le débit d'air neuf si la pollution externe devient supérieure à la pollution interne.

18. Procédé de chauffage et/ou de climatisation selon l'une des revendications précédentes, **caractérisé en ce que** l'unité centrale de gestion (48) est conçue pour pouvoir se positionner dans un mode de gestion dit "fumeur" ou "de forte occupation d'une des pièces principales (10), dite de "séjour"" durant lequel :
- elle se configure initialement dans une séquence dite "séjour":
. au début de laquelle elle commande l'ouverture de la (ou des) bouche(s) de soufflage (7) de la pièce de séjour (10) et la fermeture des bouches (5, 6) de soufflage de toutes les autres pièces principales (8, 9),
. elle calcule un débit de brassage maximal donné dans la pièce de séjour (10), et elle commande l'unité (1) de ladite pièce de séjour de façon à obtenir ce taux de brassage,
. elle adapte la puissance thermique délivrée par l'unité intérieure (1) de façon à obtenir la température de consigne dans le séjour (10),
- au bout d'un laps de temps prédéterminé, elle se configure dans une séquence dite "chambres" où :
. elle commande la fermeture de la (ou des) bouche(s) de soufflage (7) de la pièce de séjour (10) et l'ouverture des bouches de soufflage (5, 6) des autres pièces principales (8, 9) dites chambres,
. elle calcule le déficit d'air neuf dans les chambres (8, 9) durant la séquence séjour, et commande le maintien de cette séquence "chambres" pendant un laps de temps adapté pour combler ledit déficit d'air neuf,
. et elle se repositionne dans sa configuration "séjour" une fois ce laps de temps passé.

19. Procédé de chauffage et/ou de climatisation selon les revendications 9, 10 et 18 prises ensemble, **caractérisé en ce que** durant le mode de gestion "fumeur" ou "forte occupation de la pièce de séjour"(10), la centrale principale de gestion (48) est programmée pour positionner chaque bouche d'extraction (11a) et chaque bouche d'insufflation (21) en mode de débit maximal.

20. Procédé de chauffage et/ou de climatisation selon l'une des revendications 18 ou 19, **caractérisé en ce que** durant le mode de gestion "fumeur" ou "forte occupation de la pièce de séjour" (10), la séquence "chambres" est déclenchée soit au bout du laps de temps prédéterminé, soit si l'écart de la température réelle dans une des chambres (8, 9) et la température de consigne de ladite chambre devient supérieur à une valeur donnée.

21. Procédé de chauffage et/ou de climatisation selon l'une des revendications précédentes, **caractérisé en ce que** l'unité centrale de gestion (48) est programmée pour analyser l'évolution des températures dans chaque pièce principale (8, 9, 10) par rapport aux températures de consignes respectives, pour commander la fermeture de la (ou des) bouche(s) de soufflage (5, 6, 7) d'une des pièces principales (8, 9, 10) en cas de variation anormale de température dans ladite pièce, et pour émettre un signal d'alarme représentatif de cette fermeture.

22. Procédé de chauffage et/ou de climatisation selon les revendications 9, 10 prises ensemble, **caractérisé en ce qu'**en mode climatisation l'unité centrale de gestion (48) est programmée pour commander l'extraction et l'insufflation d'un débit d'air vicié et d'air neuf maximaux, lorsque la température extérieure devient inférieure aux températures de consigne.

23. Procédé de chauffage et/ou de climatisation selon l'une des revendications précédentes, **caractérisé en ce qu'**on utilise un échangeur de chaleur air neuf/air extrait (18) adapté pour assurer un préchauffage ou un prérefroidissement de l'air neuf.

24. Procédé de chauffage et/ou de climatisation selon l'une des revendications précédentes, **caractérisé en ce que** l'unité centrale de gestion (48) comprend des commandes manuelles aptes à permettre à l'utilisateur de définir plusieurs caractéristiques de fonctionnement telles que :
. définition d'au moins deux types de températures de consigne pour chaque pièce principale (8, 9, 10) telles que température de confort ou température réduite,
. définition de manière journalière ou hebdomadaire et par pas horaire de la température de consigne pour chaque pièce principale (8, 9, 10) telle que température hors gel, température de confort, température réduite....

25. Procédé de chauffage et/ou de climatisation selon l'une des revendications précédentes, destiné au chauffage et/ou la climatisation de plusieurs locaux tels que logements collectifs, bureaux, chambres d'hébergement..., **caractérisé en ce qu'**il comprend au moins une unité intérieure (1), une unité centrale de gestion (48) par local, et une unité extérieure centralisée (51) pour l'ensemble des locaux.

26. Procédé de chauffage et/ou de climatisation selon l'une des revendications 1 à 24, destiné au chauffage et/ou la climatisation de plusieurs locaux tels que logements collectifs, bureaux, chambres d'hébergement..., **caractérisé en ce qu'**il comprend au moins une unité intérieure (1), une unité centrale de gestion (48) et une unité extérieure (50) par local.

27. Dispositif de chauffage et/ou de climatisation d'un local comportant au moins une pièce de service (15) et au moins deux pièces principales (8, 9, 10), comprenant :
. une unité extérieure (50 ; 51) et au moins une unité intérieure (1), l'unité extérieure (50 ; 51) comportant des moyens de régulation à puissance variable et un échangeur, et chaque unité intérieure (1) comprenant une reprise d'air (2), des moyens de ventilation à débit et puissance variables et un échangeur, et étant adaptée pour assurer le chauffage et/ou la climatisation d'au moins deux pièces principales (8, 9, 10),
. des moyens (11a, 11b, 11c, 12, 13, 14) d'évacuation d'air vicié,
. des moyens (17, 21) d'introduction d'air neuf au niveau des reprises (2) de chaque unité intérieure (1),
. des moyens (2) de mélange air neuf/air repris dans chaque unité intérieure (1) en amont de l'échangeur de cette dernière,
. des moyens (5, 6, 7) de soufflage du mélange air neuf/air repris consistant dans chaque pièce principale (8, 9, 10) en une ou plusieurs bouche(s) de soufflage (5, 6, 7) alimentée(s) par au moins une unité intérieure (1), et associée(s) chacune à des moyens de motorisation aptes à modifier la position d'ouverture desdites bouches,
. des moyens (33 ; 38) de mesure de la température dans chaque pièce principale (8, 9, 10) auxquels sont associés les moyens de motorisation de la (ou des) bouche(s) de soufflage (5, 6, 7) de ladite pièce principale, et adaptés pour permettre d'obtenir une température de consigne dans ladite pièce,
ledit dispositif de chauffage et/ou de climatisation étant **caractérisé en ce qu'**il comprend une unité centrale de gestion (48) reliée à l'unité extérieure (50 ; 51), à chaque unité intérieure (1) et aux moyens de motorisation des bouches (5, 6, 7) de soufflage, ladite unité centrale de gestion étant programmée pour :
- soit se configurer dans un mode de gestion des températures des pièces principales (8, 9, 10) durant lequel :
. elle commande les unités extérieure (50 ; 51) et intérieure(s) (1) et les moyens de motorisation des bouches de soufflage (5, 6, 7) en fonction des informations reçues les moyens de mesure de température (33 ; 38), de façon à maintenir la température de consigne dans chaque pièce principale (8, 9, 10),
. elle relève la position des moyens de motorisation de chaque bouche de soufflage (5, 6, 7) de façon à détecter l'éventuelle fermeture totale de la (ou de toutes les) bouche(s) alimentant une pièce principale (8, 9, 10),
- et dans l'hypothèse où toutes les bouches (5, et/ou 6, et/ou 7) alimentant au moins une pièce principale (8, et/ou 9, et/ou 10) sont fermées, à se configurer dans un mode de gestion d'air neuf durant lequel :
. elle mesure le temps de fermeture de la (ou desdites) bouche(s) (5, 6, 7) fermée(s),
. au-delà d'un temps de fermeture de la (ou desdites) bouche(s) (5, 6, 7) supérieur à un seuil prédéterminé, elle calcule le déficit d'apport d'air neuf dans chaque pièce (8, 9, 10) non alimentée, et commande les moyens de motorisation de toutes les bouches de soufflage, (5, 6, 7) de façon à ouvrir chaque bouche de soufflage (5, 6, 7) initialement fermée, et à fermer les bouches de soufflage (5, 6, 7) des autres pièces initialement ouvertes, et ce, pendant un laps de temps adapté pour combler le déficit d'apport d'air neuf dans chaque pièce non initialement alimentée,
. et à se reconfigurer en mode de gestion de température dans les pièces principales (8, 9, 10) une fois le déficit d'apport d'air neuf comblé.

28. Dispositif de chauffage et/ou de climatisation selon la revendication 27, **caractérisé en ce que** l'unité centrale de gestion (48) est programmée dans sa configuration de gestion d'air neuf, pour commander l'unité extérieure (50 ; 51) et/ou la (ou les) unité(s) intérieure(s) (1) de façon que la température de l'air mélangé soufflé avoisine la température de consigne de chaque pièce (8, 9, 10) initialement fermée.

29. Dispositif de chauffage et/ou de climatisation selon l'une des revendications 27 ou 28, **caractérisé en ce que** :
. chaque bouche de soufflage (5, 6, 7) comprend un conduit de soufflage principal (22) comportant un volet d'obturation (23) commandé par les moyens de motorisation, et un conduit annexe (29) de section réduite,
. l'unité centrale de gestion (48) est programmée, dans sa configuration de gestion de température et dans l'hypothèse où toutes les bouches de soufflage (5, 6, 7) sont fermées, pour assurer une répartition équitable de l'air dans toutes les pièces (8, 9, 10) par les conduits annexes (29) des bouches de soufflage (5, 6, 7).

30. Dispositif de chauffage et/ou de climatisation selon la revendication 29, **caractérisé en ce que** les moyens de motorisation des bouches de soufflage (5, 6, 7) sont conçus pour positionner les volets d'obturation (23) dans deux positions correspondant soit à une fermeture totale, soit à une ouverture totale ou partielle des conduits principaux (22) desdites bouches.

31. Dispositif de chauffage et/ou de climatisation, selon l'une des revendications 29 ou 30, **caractérisé en ce que** le conduit annexe (29) de chaque bouche de soufflage (5, 6, 7) est équipé d'un modulateur auto-réglable (30) apte à permettre de délivrer un même débit d'air pour une plage de pressions donnée.

32. Dispositif de chauffage et/ou de climatisation selon l'une des revendications 29 à 31, **caractérisé en ce que** chaque fente (29) des bouches de soufflage (5, 6, 7) intègre un volet (52) articulé autour d'un axe transversal, et apte à osciller librement depuis une position de fermeture totale ou partielle de ladite fente (29) vers une position d'ouverture totale de ladite fente, en fonction de la pression d'air en amont de cette dernière.

33. Dispositif de chauffage et/ou de climatisation selon l'une des revendications 27 à 32, **caractérisé en ce que** chaque bouche de soufflage (5, 6, 7) est équipée d'une sonde de température (33 ; 38), pré-assemblée avec ladite bouche, faisant office de moyens de mesure de température, et disposée de façon à être balayée par l'air ambiant de la pièce, une fois ladite bouche de soufflage installée.

34. Dispositif de chauffage et/ou de climatisation selon l'une des revendications 27 à 31, **caractérisé en ce que** les moyens d'extraction d'air comprennent pour chaque pièce de service (15) une bouche d'extraction (11a, 11b, 11c) reliée à une conduite principale (13, 14) mise en dépression par un ventilateur (12).

35. Dispositif de chauffage et/ou de climatisation selon la revendication 34, **caractérisé en ce qu'**au moins une bouche d'extraction (11a) est dotée d'un dispositif de modulation de débit (41) à commande manuelle.

36. Dispositif de chauffage et/ou de climatisation selon l'une des revendications 27 à 35, **caractérisé en ce que** les moyens d'introduction d'air neuf comprennent un conduit (19) doté d'un ventilateur (17) adapté pour délivrer cet air neuf dans chaque unité intérieure (1) au droit d'une bouche d'insufflation (21) à débit modulable, de façon à permettre d'adapter le débit d'air neuf au débit d'air extrait.

37. Dispositif de chauffage et/ou de climatisation selon les revendications 35 et 36 prises ensemble, **caractérisé en ce que** l'unité centrale de gestion (48) est reliée à chaque bouche d'extraction à débit modulable (11a) et à chaque bouche d'insufflation (21) d'air neuf, et programmée pour ajuster le débit desdites bouches d'insufflation, de façon à adapter le débit d'air neuf en fonction du débit d'air extrait.

38. Dispositif de chauffage et/ou de climatisation selon la revendication 37, **caractérisé en ce qu'**il comprend un système de filtration intégré dans le conduit (19) d'amenée d'air neuf et fonction de la pollution externe environnante.

39. Dispositif de chauffage et/ou de climatisation selon l'une des revendications 27 à 38, **caractérisé en ce qu'**il comprend :
. au moins un capteur de mesure de la qualité de l'air dans le local, tel que notamment capteur d'humidité, capteur de gaz carbonique...,
. un capteur de pollution externe de mesure de valeurs correspondantes à celles d'un capteur interne, c'est-à-dire capteur d'humidité, de gaz carbonique...,
. l'unité centrale de gestion générale étant reliée aux différents capteurs externe et inteme(s), et programmée pour optimiser le débit d'air neuf réellement nécessaire.

40. Dispositif de chauffage et/ou de climatisation selon la revendication 39, **caractérisé en ce qu'**il comprend un capteur interne de mesure unique, l'unité centrale de gestion (48) étant programmée pour réguler le débit d'air extrait et le débit d'air neuf en fonction de l'information fournie par ledit capteur.

41. Dispositif de chauffage et/ou de climatisation selon la revendication 39, **caractérisé en ce que** :
- chaque bouche de soufflage (5, 6, 7) est équipée d'un capteur de mesure,
- l'unité centrale de gestion (48) est programmée de façon à optimiser le débit d'air extrait et le débit d'air neuf au niveau de chaque unité intérieure (1) en fonction de :
. la position du volet d'obturation (23) de la (ou des) bouche(s) de soufflage (5, 6, 7) de chaque pièce (8, 9, 10),
. l'information délivrée par chaque capteur représentative du taux de pollution ou d'occupation dans la pièce concernée et donc de son besoin en air neuf.

42. Dispositif de chauffage et/ou de climatisation selon l'une des revendications 27 à 41, **caractérisé en ce que** l'unité centrale de gestion (48) est conçue pour pouvoir être positionnée dans un mode de gestion dit "fumeur" ou "de forte occupation d'une des pièces principales (10) " dite de "séjour" durant lequel :
- elle se configure initialement dans une séquence dite "séjour" au début de laquelle elle commande l'ouverture de la (ou des) bouche(s) de soufflage (7) de la pièce de séjour (10) et la fermeture des bouches de soufflage (5, 6) de toutes les autres pièces principales,
. elle calcule un débit de brassage maximal donné dans la pièce de séjour (10), et elle commande l'unité (1) de ladite pièce de séjour de façon à obtenir ce taux de brassage,
. elle adapte la puissance thermique délivrée par l'unité intérieure (1) de façon à obtenir la température de consigne dans le séjour (10),
- au bout d'un laps de temps prédéterminé, elle se configure dans une séquence dite "chambres" où :
. elle commande la fermeture de la (ou des) bouche(s) de soufflage (7) de la pièce de séjour (10) et l'ouverture des bouches de soufflage des autres pièces principales (8, 9) dites chambres,
. elle calcule le déficit d'air neuf dans les chambres (8, 9) durant la séquence séjour, et commande le maintien de cette séquence "chambres" pendant un laps de temps adapté pour combler le déficit d'air neuf calculé,
. et elle se repositionne dans sa configuration "séjour" une fois ce laps de temps passé.

43. Dispositif de chauffage et/ou de climatisation selon l'une des revendications 27 à 42, **caractérisé en ce que** l'unité centrale de gestion est programmée pour analyser l'évolution des températures dans chaque pièce principale (8, 9, 10) par rapport aux températures de consignes respectives, pour commander une fermeture de la (ou des) bouche(s) de soufflage (5, 6, 7) d'une des pièces principales (8, 9, 10) en cas de variation anormale de température dans ladite pièce, et pour émettre un signal d'alarme représentatif de cette fermeture.

44. Dispositif de chauffage et/ou de climatisation selon l'une des revendications 27 à 43, comportant un échangeur de chaleur air neuf/air extrait (18) apte à assurer un préchauffage et/ou un prérefroidissement dudit air neuf.

45. Dispositif de chauffage et/ou de climatisation selon l'une des revendications 27 à 44, **caractérisé en ce que** l'unité centrale de gestion (48) comprend des commandes manuelles aptes à permettre à l'utilisateur de définir plusieurs caractéristiques de fonctionnement telles que :
. définition d'au moins deux types de températures de consigne pour chaque pièce principale (8, 9, 10) telles que température de confort ou température réduite,
. définition de manière journalière ou hebdomadaire et par pas horaire de la température de consigne pour chaque pièce (8, 9, 10) telle que température hors gel, température de confort, température réduite....

46. Dispositif de chauffage et/ou de climatisation selon l'une des revendications 27 à 45, destiné au chauffage et/ou la climatisation de plusieurs locaux tels que logements collectifs, bureaux, chambres d'hébergement..., **caractérisé en ce qu'**il comprend au moins une unité intérieure (1) et une unité centrale de gestion (48) par local, et une unité extérieure centralisée (51) pour l'ensemble des locaux.

47. Dispositif de chauffage et/ou de climatisation selon l'une des revendications 27 à 45, destiné au chauffage et/ou la climatisation de plusieurs locaux tels que logements collectifs, bureaux, chambres d'hébergement..., **caractérisé en ce qu'**il comprend au moins une unité intérieure (1), une unité centrale de gestion (48) et une unité extérieure (50) par local.

## Patentansprüche

1. Verfahren zum Heizen und/oder Klimatisieren einer Räumlichkeit, umfassend wenigstens einen Betriebsraum (15) und wenigstens zwei Haupträume (8, 9, 10), umfassend die folgenden Schritte:
• Verwenden einer Außeneinheit (50; 51) und wenigstens einer Inneneinheit (1), wobei die Außeneinheit (50; 51) Reguliermittel mit veränderlicher Leistung und einen Wärmetauscher umfasst, und wobei jede Inneneinheit (1) eine Luftaufnahmeeinheit (2), Belüftungsmittel mit veränderlichem Durchsatz und veränderlicher Leistung und einen Wärmetauscher umfasst, und mit der Aufgabe, das Heizen und/oder Klimatisieren von wenigstens zwei Haupträumen (8, 9, 10) zu gewährleisten;
• Ablassen eines bestimmten Volumens von stehender Luft;
• Zuführen eines bestimmten Frischluftvolumens zu den Luftaufnahmeeinheiten (2) jeder Inneneinheit (1);
• Mischen der Frischluft und der in jeder Inneneinheit (1) aufgenommenen Luft oberhalb des Wärmetauschers der Letzteren;
• Blasen des Gemischs aus Frischluft und geheizter und/oder gekühlter aufgenommener Luft in jeden Hauptraum (8, 9, 10) durch wenigstens eine Zuluftöffnung (5, 6, 7), die von einer Inneneinheit (1) versorgt wird/werden und die jeweils mit Antriebsmitteln verbunden ist/sind, mit denen die Öffnungsstellung der genannten Öffnungen verändert werden kann; und
• Regulieren der Temperatur in jedem Hauptraum (8, 9, 10) mit Temperaturmessmitteln (33; 38), mit denen die Antriebsmittel der Zuluftöffnungen (5, 6, 7) assoziiert sind, um eine Positionierung jeder dieser Öffnungen zu erzielen, so dass jeder der genannten Haupträume auf einer vorbestimmten Solltemperatur gehalten werden kann,
wobei das genannte Verfahren **dadurch gekennzeichnet ist, dass** eine zentrale Steuereinheit (48) verwendet wird, die mit den Außen- (50; 51) und Inneneinheiten (1), den Antriebsmitteln jeder Zuluftöffnung (5, 6, 7) und den Temperaturmessmitteln (33; 38) verbunden und so programmiert ist, dass sie wie folgt konfiguriert werden kann:
- entweder in einem Modus zum Regeln der Temperatur der Räume (8, 9, 10), in dem:
• sie die Außen- (50; 51) und Inneneinheiten (1) sowie die Antriebsmittel der Zuluftöffnungen (5, 6, 7) gemäß den von den Temperaturmessmitteln (33; 38) empfangenen Daten so regelt, dass die Solltemperatur in jedem Hauptraum (8, 9, 10) gehalten wird;
• sie die Stellung der Antriebsmittel jeder Zuluftöffnung (5, 6, 7) so ermittelt, dass eine Vollschließung der (oder aller) Öffnung(en) erfasst wird, die einen Hauptraum (8, 9 10) bedient/bedienen;
- und, wenn alle Öffnungen (5 und/oder 6 und/oder 7), die wenigstens einen Hauptraum (8 und/oder 9 und/oder 10) versorgen, geschlossen sind, in einem Modus zum Regeln von Frischluft, in dem:
• sie die Schließungszeit der genannten geschlossenen Öffnung(en) (5, 6, 7) misst;
• sie nach einer Schließungszeit der genannten Öffnung(en), die größer ist als ein vorbestimmter Schwellenwert, den Mangel an Zufuhr von Frischluft in jedem nicht versorgten Raum (8, 9, 10) errechnet und die Antriebsmittel aller Zuluftöffnungen (5, 6, 7) so steuert, dass jede zunächst geschlossene Zuluftöffnung geöffnet wird, und die zunächst offenen Zuluftöffnungen der Räume für eine Zeitperiode schließt, die geeignet ist, den Mangel an Zufuhr von Frischluft in jedem zunächst nicht versorgten Raum auszugleichen; und
• sie in den Modus zum Regeln der Temperatur in den Haupträumen umkonfiguriert wird, wenn der Mangel der Zufuhr von Frischluft ausgeglichen ist.

2. Verfahren zum Heizen und/oder Klimatisieren nach Anspruch 1, **dadurch gekennzeichnet, dass** die Hauptsteuereinheit (48) in ihrer Konfiguration zum Regeln von Frischluft die Außeneinheit (50; 51) und/oder die Inneneinheit(en) (1) so steuert, dass die Temperatur der gemischten Zuluft nahe an der Solltemperatur jedes zunächst geschlossenen Hauptraums (8, 9, 10) liegt.

3. Verfahren zum Heizen und/oder Klimatisieren nach Anspruch 1 oder 2, **dadurch gekennzeichnet, dass**:
• Zuluftöffnungen (5, 6, 7) benutzt werden, die mit einem Hauptzuluftrohr (22) ausgestattet sind, umfassend eine Verschlussblende (23), die von Antriebsmitteln gesteuert wird, und ein Zusatzrohr (29) mit einem reduzierten Querschnitt; und
• in der Konfiguration zum Regeln der Temperatur der Haupträume (8, 9, 10) der Hauptsteuereinheit (48), und unter der Annahme, dass alle Zuluftöffnungen (8, 9, 10) geschlossen sind, Luft mit Hilfe der Zusatzrohre (29) der Zuluftöffnungen (5, 6, 7) in allen Haupträumen (5, 6, 7) gleichmäßig verteilt wird.

4. Verfahren zum Heizen und/oder Klimatisieren nach Anspruch 3, **dadurch gekennzeichnet, dass** die Hauptsteuereinheit (48), wenn alle Zuluftöffnungen (5, 6, 7) geschlossen sind, die Ventilationsmittel jeder Inneneinheit (1) so steuert, dass Letztere einen minimalen Durchsatz von Gemisch aus Frischluft und aufgenommener Luft mittels des Zusatzrohres (29) der Zuluftöffnungen (5, 6, 7) bereitstellen.

5. Verfahren zum Heizen und/oder Klimatisieren nach Anspruch 3 oder Anspruch 4, **dadurch gekennzeichnet, dass** die zentrale Steuereinheit (1), wenn alle Zuluftöffnungen (5, 6, 7) geschlossen sind, die Außeneinheit (50; 51) und/oder die Inneneinheit(en) (1) so steuert, dass die Temperatur der gemischten Zuluft nahe an der Solltemperatur der Haupträume (8, 9, 10) liegt.

6. Verfahren zum Heizen und/oder Klimatisieren nach einem der Ansprüche 3 bis 5, **dadurch gekennzeichnet, dass** jedes Zusatzrohr (29) jeder Zuluftöffnung (5, 6, 7) mit einem automatisch verstellbaren Modulator (30) ausgestattet ist, der denselben Durchsatz von gemischter Luft für einen bestimmten Druckbereich zuführen kann.

7. Verfahren zum Heizen und/oder Klimatisieren nach einem der Ansprüche 3 bis 6, **dadurch gekennzeichnet, dass** jeder Schlitz (29) der Zuluftöffnungen (5, 6, 7) eine Klappe (52) aufweist, die um eine Querachse artikuliert ist und sich frei zwischen einer Voll- oder Teilschließstellung des genannten Schlitzes (29) und einer Vollöffnungsstellung des genannten Schlitzes in Abhängigkeit vom Luftdruck oberhalb des Letzteren bewegen kann.

8. Verfahren zum Heizen und/oder Klimatisieren nach einem der Ansprüche 3 bis 7, **dadurch gekennzeichnet, dass** jede Zuluftöffnung (5, 6, 7) mit einem Temperatursensor (33; 38) ausgestattet ist, der als Mittel zum Messen der Temperatur dient, an der genannten Zuluftöffnung vormontiert und so angeordnet ist, dass er mit der Umgebungsluft des Raums in Kontakt kommt.

9. Verfahren zum Heizen und/oder Klimatisieren nach einem der vorherigen Ansprüche, **dadurch gekennzeichnet, dass** stehende Luft aus den Betriebsräumen (15) mit Abzugsöffnungen (11a, 11b, 11c) abgezogen wird, die mit Rohren (13, 14) verbunden sind, in denen mit einem Lüfter (12) ein niedriger Druck erzeugt wird.

10. Verfahren zum Heizen und/oder Klimatisieren nach Anspruch 9, **dadurch gekennzeichnet, dass** wenigstens einer der Betriebsräume (15) mit einer Abzugsöffnung (11a) ausgestattet ist, die mit einem manuell bedienten Durchsatzmodulator (42) versehen ist.

11. Verfahren zum Heizen und/oder Klimatisieren nach einem der vorherigen Ansprüche, **dadurch gekennzeichnet, dass** die Frischluft mit Hilfe eines mit einem Lüfter (17) versehenen Rohres (19) in die Räumlichkeit eingeleitet wird, und dadurch, dass diese Frischluft jeder Inneneinheit (1) mit Rohren (20) zugeführt wird, die jeweils eine Einsaugöffnung (21) mit einem Durchsatz umfassen, der so moduliert werden kann, dass der Durchsatz von Frischluft an den Durchsatz von abgezogener Luft angepasst werden kann.

12. Verfahren zum Heizen und/oder Klimatisieren nach Anspruch 10 und 11 zusammen genommen, **dadurch gekennzeichnet, dass** die zentrale Steuereinheit (48) mit jeder Abzugsöffnung (11a) mit modulierbarem Durchsatz und mit jeder Öffnung (21) zum Einblasen von Frischluft verbunden und so programmiert ist, dass sie den Durchsatz der genannten Einblasöffnungen so verstellt, dass der Durchsatz von Frischluft an den Durchsatz von abgezogener Luft angepasst wird.

13. Verfahren zum Heizen und/oder Klimatisieren nach Anspruch 12, **dadurch gekennzeichnet, dass** der Eingang des Rohrs zum Zuführen von Frischluft mit einem Filtersystem gemäß der externen Umgebungsverschmutzung ausgestattet ist.

14. Verfahren zum Heizen und/oder Klimatisieren nach einem der Ansprüche 1 bis 12, **dadurch gekennzeichnet, dass**:
• in der Räumlichkeit wenigstens ein Sensor vorgesehen ist, um die Qualität der Luft in der genannten Räumlichkeit zu messen, z.B. insbesondere ein Luftfeuchtigkeitssensor, ein Kohlendioxidsensor usw.;
• das Gerät mit einem Außensensor zum Messen von Werten entsprechend denen eines Innensensors ausgestattet ist, d.h. insbesondere ein Luftfeuchtigkeitssensor, ein Kohlendioxidsensor usw.;
• das allgemeine Steuersystem mit jedem Messsensor und dem Außensensor verbunden und der Letztere so programmiert ist, dass er den Durchsatz von Frischluft optimiert, der tatsächlich für die Räumlichkeit notwendig ist.

15. Verfahren zum Heizen und/oder Klimatisieren nach Anspruch 14, **dadurch gekennzeichnet, dass** die Räumlichkeit mit einem einzelnen Messsensor ausgestattet wird, wobei die zentrale Steuereinheit (48) gemäß den von dem genannten Sensor zugeführten Daten programmiert ist, um den abgezogenen Durchsatz und den Durchsatz von eingeblasener Frischluft zu regulieren.

16. Verfahren zum Heizen und/oder Klimatisieren nach Anspruch 14, **dadurch gekennzeichnet, dass**:
• jede Zuluftöffnung (5, 6, 7) mit einem Messsensor ausgestattet wird; und
• die zentrale Steuereinheit (48) so programmiert ist, dass sie den Durchsatz von abgezogener Luft und den Durchsatz von eingeblasener Luft an jeder Inneneinheit (1) gemäß den folgenden Parametern optimiert:
• der Stellung der Verschlussblende (23) der Zuluftöffnung(en) (5, 6, 7) jedes Raums (8, 9, 10);
• den von jedem Sensor in dem betroffenen Raum gelieferten Daten, die für dessen Frischluftbedarf repräsentativ sind.

17. Verfahren zum Heizen und/oder Klimatisieren nach einem der Ansprüche 13 bis 16, **dadurch gekennzeichnet, dass** die zentrale Steuereinheit (48) so programmiert ist, dass sie den Durchsatz von Frischluft auf einen Minimalwert begrenzt, wenn die externe Verschmutzung höher wird als die interne Verschmutzung.

18. Verfahren zum Heizen und/oder Klimatisieren nach einem der vorherigen Ansprüche, **dadurch gekennzeichnet, dass** die zentrale Steuereinheit (48) so ausgelegt ist, dass sie in einen Steuermodus "verraucht" oder "hohe Personenzahl in einem der Haupträume (10) ("Wohnzimmer" genannt)" umgeschaltet werden kann, in dem:
- sie zunächst in einer "Wohnzimmer" genannten Sequenz konfiguriert ist;
• zu deren Beginn sie das Öffnen der Zuluftöffnung(en) (7) des Wohnzimmers (10) und das Schließen der Zuluftöffnungen (5, 6) aller anderen Haupträume (8, 9) anweist;
• sie einen bestimmten maximalen Mischdurchsatz im Wohnzimmer (10) errechnet und die Einheit (1) des genannten Wohnzimmers so steuert, dass dieses Mischniveau erreicht wird;
• sie die von der Inneneinheit (1) gelieferte Wärmeleistung so anpasst, dass die Solltemperatur im Wohnzimmer (10) erreicht wird,
- sie nach Ablauf einer vorbestimmten Zeitperiode in eine "Schlafzimmer" genannte Sequenz konfiguriert wird, in der:
• sie das Schließen der Zuluftöffnung(en) (7) des Wohnzimmers (10) und das Öffnen der Zuluftöffnungen (5, 6) der übrigen Schlafzimmer genannten Haupträume (8, 9) anweist;
• sie den Mangel an Frischluft in den Schlafzimmern (8, 9) während der Wohnzimmersequenz errechnet und das Halten dieser "Schlafzimmer"-Sequenz für eine Zeitperiode anweist, die so gewählt wird, dass der genannte Mangel an Frischluft ausgeglichen wird; und
• sie nach Ablauf dieser Zeitperiode in ihre "Wohnzimmer"-Konfiguration umgeschaltet wird.

19. Verfahren zum Heizen und/oder Klimatisieren nach Anspruch 9, 10 und 18 zusammen genommen, **dadurch gekennzeichnet, dass** das Hauptsteuersystem (48) im Steuermodus "verraucht" oder "hohe Personenzahl im Wohnzimmer" (10) so programmiert ist, dass es jede Abzugsöffnung (11a) und jede Einblasöffnung (21) in den Maximaldurchsatzmodus stellt.

20. Verfahren zum Heizen und/oder Klimatisieren nach Anspruch 18 oder Anspruch 19, **dadurch gekennzeichnet, dass** im Steuermodus "verraucht" oder "hohe Personenzahl im Wohnzimmer" (10) die "Schlafzimmer"-Sequenz ausgelöst wird, entweder nach der vorbestimmten Zeitperiode oder wenn die Differenz zwischen der Ist-Temperatur in einem der Schlafzimmer (8, 9) und der Solltemperatur des genannten Schlafzimmers größer wird als ein bestimmter Wert.

21. Verfahren zum Heizen und/oder Klimatisieren nach einem der vorherigen Ansprüche, **dadurch gekennzeichnet, dass** die zentrale Steuereinheit (48) so programmiert ist, dass sie die Bewegungen der Temperaturen in jedem Hauptzimmer (8, 9, 10) relativ zu den jeweiligen Solltemperaturen analysiert, um die Schließung der Zuluftöffnung(en) (5, 6, 7) eines der Haupträume (8, 9, 10) im Falle einer anomalen Temperaturvariation in dem genannten Raum anzuweisen und ein Alarmsignal auszugeben, das für diese Schließung repräsentativ ist.

22. Verfahren zum Heizen und/oder Klimatisieren nach Anspruch 9 und 10 zusammen genommen, **dadurch gekennzeichnet, dass** die zentrale Steuereinheit (48) im Klimatisierungsmodus so programmiert ist, dass sie das Abziehen und Einblasen eines maximalen Durchsatzes von stehender Luft und Frischluft anweist, wenn die Außentemperatur unter die Solltemperaturen absinkt.

23. Verfahren zum Heizen und/oder Klimatisieren nach einem der vorherigen Ansprüche, **dadurch gekennzeichnet, dass** ein Wärmetauscher (18) für Frischluft/abgezogene Luft benutzt wird, der die Aufgabe hat, die Frischluft vorzuwärmen oder vorzukühlen.

24. Verfahren zum Heizen und/oder Klimatisieren nach einem der vorherigen Ansprüche, **dadurch gekennzeichnet, dass** die zentrale Steuereinheit (48) manuelle Bedienelemente umfasst, mit denen der Benutzer mehrere Funktionscharakteristiken vordefinieren kann, wie z.B.:
• Definition von wenigstens zwei Solltemperaturtypen für jedes Hauptzimmer (8, 9, 10), z.B. Komforttemperatur oder reduzierte Temperatur; und
• Definition der Solltemperatur für jedes Hauptzimmer (8, 9, 10) täglich oder wöchentlich, und in Stundenschritten, z.B. Gefrierschutztemperatur, Komforttemperatur, reduzierte Temperatur usw.

25. Verfahren zum Heizen und/oder Klimatisieren nach einem der vorherigen Ansprüche zum Heizen und/oder Klimatisieren von mehreren Räumlichkeiten wie z.B. Wohnblöcken, Büros, Unterkunftsräumen usw., **dadurch gekennzeichnet, dass** es wenigstens eine Inneneinheit (1), eine zentrale Steuereinheit (48) für jede Räumlichkeit und eine zentrale Außeneinheit (51) für die Gesamtheit der Räumlichkeiten umfasst.

26. Verfahren zum Heizen und/oder Klimatisieren nach einem der Ansprüche 1 bis 24 zum Heizen und/oder Klimatisieren von mehreren Räumlichkeiten wie z.B. Wohnblöcken, Büros, Unterkunftsräumen usw., **dadurch gekennzeichnet, dass** es wenigstens eine Inneneinheit (1), eine zentrale Steuereinheit (48) und eine Außeneinheit (50) für jede Räumlichkeit umfasst.

27. Vorrichtung zum Heizen und/oder Klimatisieren einer Räumlichkeit, umfassend wenigstens einen Betriebsraum (15) und wenigstens zwei Haupträume (8, 9, 10), die Folgendes umfasst:
• eine Außeneinheit (50; 51) und wenigstens eine Inneneinheit (1), wobei die Außeneinheit (50; 51) Mittel zum Regeln mit veränderlicher Leistung und einen Wärmetauscher umfasst, und wobei jede Inneneinheit (1) eine Luftaufnahmeeinheit (2), Mittel zum Ventilieren mit variablem Durchsatz und variabler Leistung und einen Wärmetauscher umfasst, mit der Aufgabe, wenigstens zwei Haupträume (8, 9, 10) zu heizen und/oder zu klimatisieren;
• Mittel (11a, 11b, 11c, 12, 13, 14) zum Ablassen von stehender Luft;
• Mittel (17, 21) zum Einleiten von Frischluft an den Aufnahmeeinheiten (2) jeder Inneneinheit (1);
• Mittel (2) zum Mischen von Frischluft/aufgenommener Luft in jeder Inneneinheit (1) oberhalb des Austauschers der Letzteren;
• Mittel (5, 6, 7) zum Blasen des Gemischs aus Frischluft und aufgenommener Luft in jeden Hauptraum (8, 9, 10) in einer oder mehreren Zuluftöffnung(en) (5, 6, 7), die von wenigstens einer Inneneinheit (1) versorgt wird/werden, die jeweils mit Antriebsmitteln assoziiert sind, die die Öffnungsstellung der genannten Öffnungen modifizieren können;
• Mittel (33; 38) zum Messen der Temperatur in jedem Hauptraum (8, 9, 10), mit denen die Antriebsmittel der Zuluftöffnung(en) (5, 6, 7) des genannten Hauptraums assoziiert sind, mit der Aufgabe, eine Solltemperatur in dem genannten Raum zu erzielen,
wobei die genannte Vorrichtung zum Heizen und/oder Klimatisieren **dadurch gekennzeichnet ist, dass** sie eine zentrale Steuereinheit (48) umfasst, die mit der Außeneinheit (50; 51), jeder Inneneinheit (1) und den Antriebsmitteln für die Zuluftöffnungen (5, 6, 7) verbunden ist, und die genannte zentrale Steuereinheit so programmiert ist, dass sie:
- entweder in einem Modus zum Regeln der Temperaturen der Haupträume (8, 9, 10) konfiguriert ist, in dem:
• sie die Außen- (50; 51) und Inneneinheit(en) (1) und die Antriebsmittel der Zuluftöffnungen (5, 6, 7) gemäß von den Mitteln (33; 38) zum Messen der Temperatur empfangenen Daten regelt, um die Solltemperatur in jedem Hauptraum (8, 9, 10) zu halten;
• sie die Stellung der Antriebsmittel jeder Zuluftöffnung (5, 6, 7) feststellt, um eine Vollschließung der (oder aller) Öffnung(en) zu erfassen, die einen Hauptraum (8, 9, 10) versorgt/versorgen;
- oder unter der Annahme, dass alle Öffnungen (5 und/oder 6 und/oder 7), die wenigstens einen Hauptraum (8 und/oder 9 und/oder 10) versorgen, geschlossen sind, sie in einen Modus zum Regeln von Frischluft konfiguriert wird, in dem:
• sie die Schließungszeit der genannten geschlossenen Öffnung(en) (5, 6, 7) misst;
• sie jenseits einer Schließungszeit der genannten Öffnung(en) (5, 6, 7), die länger ist als ein vorbestimmter Schwellenwert, den Mangel an Zufuhr von Frischluft in jedem nicht versorgten Raum (8, 9, 10) errechnet und die Antriebsmittel aller Zuluftöffnungen (5, 6, 7) so steuert, dass jede zunächst geschlossene Zuluftöffnung (5, 6, 7) geöffnet und die zunächst geöffneten Zuluftöffnungen (5, 6, 7) der anderen Räume für eine Zeitperiode geschlossen werden, die so gewählt wird, dass der Mangel an in jedem zunächst nicht versorgten Raum zugeführter Frischluft ausgeglichen wird; und
• sie in einen Modus zum Regeln der Temperatur in den Haupträumen (8, 9, 10) umkonfiguriert wird, wenn der Mangel an Zufuhr von Frischluft ausgeglichen ist.

28. Vorrichtung zum Heizen und/oder Klimatisieren nach Anspruch 27, **dadurch gekennzeichnet, dass** die zentrale Steuereinheit (48) in der Konfiguration zum Regeln von Frischluft so programmiert ist, dass sie die Außeneinheit (50; 51) und/oder die Inneneinheit(en) (1) so steuert, dass die Temperatur der gemischten Zuluft nahe an der Solltemperatur jedes zunächst geschlossenen Raums (8, 9, 10) liegt.

29. Vorrichtung zum Heizen und/oder Klimatisieren nach Anspruch 27 oder Anspruch 28, **dadurch gekennzeichnet, dass**:
• jede Zuluftöffnung (5, 6, 7) ein Hauptzuluftrohr (22) umfasst, das eine Verschlussblende (23), die von den Antriebsmitteln gesteuert wird, und ein Zusatzrohr (29) mit einem reduzierten Querschnitt aufweist;
• die zentrale Steuereinheit (48) in ihrer Konfiguration zum Regeln der Temperatur und unter der Annahme, dass alle Zuluftöffnungen (5, 6, 7) geschlossen sind, so programmiert ist, dass die Luft in allen Räumen (8, 9, 10) mit den Zusatzrohren (29) der Zuluftöffnungen (5, 6, 7) gleichmäßig verteilt wird.

30. Vorrichtung zum Heizen und/oder Klimatisieren nach Anspruch 29, **dadurch gekennzeichnet, dass** die Antriebsmittel der Zuluftöffnungen (5, 6, 7) so ausgelegt sind, dass sie die Verschlussblenden (23) in zwei Stellungen stellen, die entweder einer Vollschließung oder einer Voll- oder Teilöffnung der Hauptrohre (22) der genannten Öffnungen entsprechen.

31. Vorrichtung zum Heizen und/oder Klimatisieren nach Anspruch 29 oder Anspruch 30, **dadurch gekennzeichnet, dass** das Zusatzrohr (29) jeder Zuluftöffnung (5, 6, 7) mit einem automatisch verstellbaren Modulator (30) ausgestattet ist, mit dem derselbe Luftdurchsatz für einen bestimmten Druckbereich möglich ist.

32. Vorrichtung zum Heizen und/oder Klimatisieren nach einem der Ansprüche 29 bis 31, **dadurch gekennzeichnet, dass** in jedem Schlitz (29) der Zuluftöffnungen (5, 6, 7) eine Klappe (52) integriert ist, die um eine Querachse artikuliert ist und sich frei zwischen einer Voll- oder Teilverschlussstellung des genannten Schlitzes (29) und einer Vollöffnungsstellung des genannten Schlitzes gemäß dem Luftdruck oberhalb des Letzteren bewegen kann.

33. Vorrichtung zum Heizen und/oder Klimatisieren nach einem der Ansprüche 27 bis 32, **dadurch gekennzeichnet, dass** jede Zuluftöffnung (5, 6, 7) mit einem Temperatursensor (33; 38) ausgestattet ist, der an der genannten Öffnung vormontiert ist, als Mittel zum Messen der Temperatur dient und so angeordnet ist, dass er mit der Umgebungsluft des Raums in Kontakt ist, wenn die genannte Zuluftöffnung installiert ist.

34. Vorrichtung zum Heizen und/oder Klimatisieren nach einem der Ansprüche 27 bis 31, **dadurch gekennzeichnet, dass** das Luftabzugsmittel für jeden Betriebsraum (15) eine Abzugsöffnung (11a, 11b, 11c) umfasst, die mit einem Hauptrohr (13, 14) verbunden ist, in dem mit einem Lüfter (12) ein niedriger Druck erzeugt wird.

35. Vorrichtung zum Heizen und/oder Klimatisieren nach Anspruch 34, **dadurch gekennzeichnet, dass** wenigstens eine Abzugsöffnung (11a) mit einem manuell bedienten Durchsatzmodulator (41) ausgestattet ist.

36. Vorrichtung zum Heizen und/oder Klimatisieren nach einem der Ansprüche 27 bis 35, **dadurch gekennzeichnet, dass** die Mittel zum Einleiten von Frischluft ein Rohr (19) umfassen, das mit einem Lüfter (17) versehen ist, der die Aufgabe hat, diese Frischluft jeder Inneneinheit (1) in der Höhe von einer Einblasöffnung (21) mit modulierbarem Durchsatz zuzuführen, so dass der Durchsatz von Frischluft an den Durchsatz von abgezogener Luft angepasst werden kann.

37. Vorrichtung zum Heizen und/oder Klimatisieren nach Anspruch 35 und 36 zusammen genommen, **dadurch gekennzeichnet, dass** die zentrale Steuereinheit (48) mit jeder Abzugsöffnung (11a) mit modulierbarem Durchsatz und mit jeder Öffnung (21) zum Einblasen von Frischluft verbunden und so programmiert ist, dass sie den Durchsatz der genannten Einblasöffnungen so verstellt, dass der Durchsatz von Frischluft an den Durchsatz von abgezogener Luft angepasst wird.

38. Vorrichtung zum Heizen und/oder Klimatisieren nach Anspruch 37, **dadurch gekennzeichnet, dass** sie ein Filtersystem umfasst, das gemäß der externen Umgebungsverschmutzung in das Rohr (19) zum Zuführen von Frischluft integriert ist.

39. Vorrichtung zum Heizen und/oder Klimatisieren nach einem der Ansprüche 27 bis 38, **dadurch gekennzeichnet, dass** sie Folgendes umfasst:
• wenigstens einen Sensor zum Messen der Qualität der Luft in der Räumlichkeit, z.B. insbesondere ein Luftfeuchtigkeitssensor, ein Kohlendioxidsensor usw.;
• einen externen Verschmutzungssensor zum Messen von Werten, die denen eines Innensensors entsprechen, d.h. ein Luftfeuchtigkeitssensor, ein Kohlendioxidsensor usw.;
• wobei die allgemeine zentrale Steuereinheit mit den verschiedenen Innen- und Außensensoren verbunden und so programmiert ist, dass der Durchsatz von Frischluft optimiert wird, der tatsächlich notwendig ist.

40. Vorrichtung zum Heizen und/oder Klimatisieren nach Anspruch 39, **dadurch gekennzeichnet, dass** sie einen einzelnen internen Messsensor umfasst, wobei die zentrale Steuereinheit (48) so programmiert ist, dass sie den Durchsatz von abgezogener Luft und den Durchsatz von Frischluft gemäß den von dem genannten Sensor zugeführten Daten regelt.

41. Vorrichtung zum Heizen und/oder Klimatisieren nach Anspruch 39, **dadurch gekennzeichnet, dass**:
- jede Zuluftöffnung (5, 6, 7) mit einem Messsensor ausgestattet ist;
- die zentrale Steuereinheit (48) so programmiert ist, dass sie den Durchsatz von abgezogener Luft und den Durchsatz von Frischluft an jeder Inneneinheit (1) gemäß den folgenden Parametern optimiert:
• der Stellung der Verschlussblende (23) der Zuluftöffnung(en) (5, 6, 7) jedes Raums (8, 9, 10);
• den von jedem Sensor gelieferten Daten, die den Grad an Verschmutzung oder Belegung des betroffenen Raums und somit dessen Frischluftbedarf repräsentieren.

42. Vorrichtung zum Heizen und/oder Klimatisieren nach einem der Ansprüche 27 bis 41, **dadurch gekennzeichnet, dass** die zentrale Steuereinheit (48) so ausgelegt ist, dass sie in einen Steuermodus "verraucht" oder "hohe Personenzahl in einem der Haupträume (10) ("Wohnzimmer" genannt)" gesetzt werden kann, in dem:
- sie zunächst in einer "Wohnzimmer" genannten Sequenz konfiguriert ist, zu deren Beginn sie das Öffnen der Zuluftöffnung(en) (7) des Wohnzimmers (10) und das Schließen der Zuluftöffnungen (5, 6) aller anderen Haupträume anweist;
• sie einen bestimmten maximalen Mischdurchsatz im Wohnzimmer (10) errechnet und die Einheit (1) des genannten Wohnzimmers so steuert, dass dieses Mischniveau erreicht wird;
• sie die von der Inneneinheit (1) gelieferte Wärmeleistung so anpasst, dass die Solltemperatur im Wohnzimmer (10) erreicht wird;
- sie nach einer vorbestimmten Zeitperiode in einer "Schlafzimmer" genannten Sequenz konfiguriert wird, in der:
• sie das Schließen der Zuluftöffnung(en) (7) des Wohnzimmers (10) und das Öffnen der Zuluftöffnungen der übrigen Haupträume (8, 9), Schlafzimmer genannt, anweist;
• sie den Mangel an Frischluft in den Schlafzimmern (8, 9) während der Wohnzimmersequenz errechnet und das Halten dieser "Schlafzimmer"-Sequenz für eine Zeitperiode anweist, die so gewählt wird, dass der errrechnete Mangel an Frischluft ausgeglichen wird; und
• sie nach Ablauf dieser Zeitperiode in ihre "Wohnzimmer"-Konfiguration umgestellt wird.

43. Vorrichtung zum Heizen und/oder Klimatisieren nach einem der Ansprüche 27 bis 42, **dadurch gekennzeichnet, dass** die zentrale Steuereinheit so programmiert ist, dass sie die Bewegung der Temperaturen in jedem Raum (8, 9, 10) relativ zu den jeweiligen Solltemperaturen analysiert, um das Schließen der Zuluftöffnung(en) (5, 6, 7) eines der Haupträume (8, 9, 10) im Fall einer anomalen Temperaturvariation in dem genannten Raum anzuweisen und ein Alarmsignal auszugeben, das für diese Schließung repräsentativ ist.

44. Vorrichtung zum Heizen und/oder Klimatisieren nach einem der Ansprüche 27 bis 43, umfassend einen Wärmetauscher für Frischluft/abgezogene Luft (18), der die Aufgabe hat, die genannte Frischluft vorzuwärmen und/oder vorzukühlen.

45. Vorrichtung zum Heizen und/oder Klimatisieren nach einem der Ansprüche 27 bis 44, **dadurch gekennzeichnet, dass** die zentrale Steuereinheit (48) manuelle Bedienelemente umfasst, mit denen der Benutzer mehrere Funktionscharakteristiken vordefinieren kann, wie z.B.:
• Definition von wenigstens zwei Solltemperaturtypen für jeden Hauptraum (8, 9, 10), wie z.B. Komforttemperatur oder reduzierte Temperatur; und
• Definition der Solltemperatur für jeden Hauptraum (8, 9, 10) täglich oder wöchentlich, und in Stundenschritten, wie z.B. Gefrierschutztemperatur, Komforttemperatur, reduzierte Temperatur usw.

46. Vorrichtung zum Heizen und/oder Klimatisieren nach einem der Ansprüche 27 bis 45 zum Heizen und/oder Klimatisieren von mehreren Räumlichkeiten wie z.B. Wohnblöcken, Büros, Unterkunftsräumen usw., **dadurch gekennzeichnet, dass** sie wenigstens eine Inneneinheit (1) und eine zentrale Steuereinheit (48) für jede Räumlichkeit und eine zentrale Außeneinheit (51) für die Gesamtheit der Räumlichkeiten umfasst.

47. Vorrichtung zum Heizen und/oder Klimatisieren nach einem der Ansprüche 27 bis 45 zum Heizen und/oder Klimatisieren von mehreren Räumlichkeiten wie z.B. Wohnblöcken, Büros, Unterkunftsräumen usw., **dadurch gekennzeichnet, dass** sie wenigstens eine Inneneinheit (1), eine zentrale Steuereinheit (48) und eine Außeneinheit (50) für jede Räumlichkeit umfasst.

## Claims

1. Method for heating and/or air conditioning of premises, comprising at least one service room (15), and at least two main rooms (8,9,10), consisting of:
. using an external unit (50; 51) and at least one internal unit (1), the external unit (50; 51) comprising means for regulation with variable power and an exchanger, and each internal unit (1) comprising an air take-up unit (2), means for ventilation with a variable throughput and power and an exchanger, and being designed to assure the heating and/or air conditioning of at least two main rooms (8, 9,10);
. discharging a given volume of stagnant air;
. conveying a given volume of renewed air to the air take-up units (2) of each internal unit (1);
. mixing the renewed air and the air taken up in each internal unit (1), upstream from the exchanger of the latter;
. blowing the mixture of renewed air/ heated and/or cooled air taken up, into each main room (8,9,10), through at least one blower aperture (5,6,7) which is supplied by an internal unit (1), and each of which is associated with means for motorisation, which can make it possible to modify the position of opening of the said apertures; and
. regulating the temperature in each main room (8,9,10), by means of temperature measurement means (33; 38), with which the means for motorisation of the blower apertures (5,6,7) are associated, such as to obtain positioning of each of these apertures which can make it possible to maintain each of the said main rooms at a pre-determined set temperature,
the said method being **characterized in that** a central control unit (48) is used, which is connected to the external (50; 51) and internal unit(s) (1), the means for motorisation of each blower aperture (5,6,7), and the means for measurement of the temperature (33; 38), and is programmed to be configured:
- either in a mode for control of the temperatures of the rooms (8,9,10), during which:
. it controls the external (50; 51) and internal unit(s) (1) and the means for motorisation of the blower apertures (5,6,7), according to the information received from the means for measurement of the temperature (33; 38), such as to maintain the set temperature in each main room (8,9,10);
. it determines the position of the means for motorisation of each blower aperture (5,6,7), such as to detect any total closure of the (or all of the) aperture(s) which supply/supplies a main room (8,9,10);
- and, if all the apertures (5, and/or 6, and/or 7) which supply at least one main room (8, and/or 9, and/or 10) are closed, it is configured in a mode for control of renewed air, during which:
. it measures the time of closure of the said aperture(s) (5,6,7) closed;
. after a time of closure of the said aperture(s), which is greater than a pre-determined threshold, it calculates the deficit in the supply of renewed air in each room (8,9,10) not supplied, and controls the means for motorisation of all the blower apertures (5,6,7), such as to open each blower aperture initially closed, and to close the blower apertures initially opened of the rooms, for a period of time which is designed to make up for the deficit in the supply of renewed air in each room not initially supplied; and
. it is reconfigured in the temperature control mode in the main rooms, when the deficit in the supply of renewed air has been made up.

2. Method for heating and/or air conditioning as claimed in claim 1, **characterized in that** in its renewed air control configuration, the main control unit (48) controls the external unit (50; 51) and/or the internal unit(s) (1) such that the temperature of the blown air mixed is close to the set temperature of each main room (8,9,10) initially closed.

3. Method for heating and/or air conditioning as claimed in claim 1 or claim 2, **characterized in that**:
. use is made of blower apertures (5,6,7) provided with a main blower pipe (22), comprising a closing shutter (23) controlled by means for motorisation, and an additional pipe (29) with a reduced cross-section; and
. in the configuration for controlling the temperature of the main rooms (8,9,10), of the main control unit (48), and on the assumption that all the blower apertures (8,9,10) are closed, air is distributed equally in all the main rooms (5,6,7), by means of the additional pipes (29) of the blower apertures (5,6,7).

4. Method for heating and/or air conditioning as claimed in claim 3, **characterized in that** when all the blower apertures (5,6,7) are closed, the main control unit (48) controls the means for ventilation of each internal unit (1), such that the latter provide a minimal throughput of mixture of renewed/air taken up, by means of the additional pipe (29) of the blower apertures (5,6,7).

5. Method for heating and/or air conditioning as claimed in claim 3 or claim 4, **characterized in that** when all the blower apertures (5,6,7) are closed, the central control unit (1) controls the external unit (50; 51) and/or the internal unit(s) (1), such that the temperature of the mixed air blown is close to the set temperature of the main rooms (8,9,10).

6. Method for heating and/or air conditioning as claimed in any one of claims 3 to 5, **characterized in that** each additional pipe (29) of each blower aperture (5,6,7) is equipped with an automatically adjustable modulator (30), which can supply the same throughput of mixed air for a given range of pressures.

7. Method for heating and/or air conditioning as claimed in any one of claims 3 to 6, **characterized in that** each slot (29) of the blower apertures (5,6,7) contains a shutter (52), which is articulated around a transverse axis, and can oscillate freely from a position of total or partial closure of the said slot (29), towards a position of total opening of the said slot, according to the air pressure upstream from the latter.

8. Method for heating and/or air conditioning as claimed in any one of claims 3 to 7, **characterized in that** each blower aperture (5,6,7) is equipped with a temperature sensor (33; 38), which acts as a means for measuring the temperature, is pre-assembled to the said blower aperture, and is disposed such as to be swept by the ambient air of the room.

9. Method for heating and/or air conditioning as claimed in any one of the preceding claims, **characterized in that** stagnant air is extracted from the service rooms (15) by means of extraction apertures (11a, 11b, 11c) which are connected to pipes (13,14) in which low pressure is created by a fan (12).

10. Method for heating and/or air conditioning as claimed in claim 9, **characterized in that** at least one of the service rooms (15) is equipped with an extraction aperture (11a) provided with a manually-controlled throughput modulator (42).

11. Method for heating and/or air conditioning as claimed in any one of the preceding claims, **characterized in that** the renewed air is introduced into the premises by means of a pipe (19) which is provided with a fan (17), and **in that** this renewed air is supplied to each internal unit (1) by means of pipes (20), each of which comprises an insufflation aperture (21) with a throughput which can be modulated, thus making it possible to adapt the throughput of renewed air according to the throughput of air extracted.

12. Method for heating and/or air conditioning as claimed in claims 10 and 11 taken together, **characterized in that** the central control unit (48) is connected to each extraction aperture (11a) with a throughput which can be modulated and to each aperture (21) for insufflation of renewed air, and is programmed to adjust the throughput of the said insufflation apertures such as to adapt the throughput of renewed air according to the throughput of air extracted.

13. Method for heating and/or air conditioning as claimed in claim 12, **characterized in that** the intake of the pipe for supplying renewed air is equipped with a filtering system, according to the ambient external pollution.

14. Method for heating and/or air conditioning as claimed in any one of claims 1 to 12, **characterized in that**:
. there is provided in the premises at least one sensor to measure the quality of the air in the said premises, such as in particular a humidity sensor, a carbon dioxide sensor, etc.;
. the device is equipped with an external sensor to measure values corresponding to those of an internal sensor, i.e. in particular a humidity sensor, a carbon dioxide sensor, etc.;
. the general control system is connected to each measuring sensor and to the external sensor, and the latter is programmed such as to optimise the throughput of renewed air which is actually necessary for the premises.

15. Method for heating and/or air conditioning as claimed in claim 14, **characterized in that** the premises are equipped with a single measuring sensor, the central control unit (48) being programmed, according to the information supplied by the said sensor, to regulate the throughput extracted and the throughput of renewed air insufflated.

16. Method for heating and/or air conditioning as claimed in claim 14, **characterized in that**:
. each blower aperture (5,6,7) is equipped with a measuring sensor; and
. the central control unit (48) is programmed such as to optimise the throughput of air extracted and the throughput of air insufflated at each internal unit (1), according to:
. the position of the closing shutter (23) of the blower aperture(s) (5,6,7) of each room (8,9,10); and
. the information supplied by each sensor in the room concerned, which is representative of its need for renewed air.

17. Method for heating and/or air conditioning as claimed in any one of claims 13 to 16, **characterized in that** the central control unit (48) is programmed to limit the throughput of renewed air to a minimal value, if the external pollution becomes higher than the internal pollution.

18. Method for heating and/or air conditioning as claimed in any one of the preceding claims, **characterized in that** the central control unit (48) is designed to be able to be positioned in a control mode which is known as "smoky", or "high level of occupation of one of the main rooms (10), known as the "living room" ", during which:
- it is initially configured in a sequence known as "living room";
. at the beginning of which it commands opening of the blower aperture(s) (7) of the living room (20), and closure of the blower apertures (5,6) of all the other main rooms (8,9);
. it calculates a given maximal mixing throughput in the living room (10), and controls the unit (1) of the said living room such as to obtain this level of mixing;
. it adapts the thermal power supplied by the internal unit (1), such as to obtain the set temperature in the living room (10);
- after a pre-determined period of time, it is configured in a sequence known as "bedrooms", in which:
. it commands closure of the blower aperture(s) (7) of the living room (10), and opening of the blower apertures (5,6) of the other main rooms (8,9) known as bedrooms;
. it calculates the deficit of renewed air in the bedrooms (8,9) during the living room sequence, and commands maintenance of this "bedroom" sequence for a period of time which is designed to make up for the said deficit of renewed air: and
. it is repositioned in its "living room" configuration, after this period of time has elapsed.

19. Method for heating and/or air conditioning as claimed in claims 9, 10 and 18 taken together, **characterized in that** during the "smoky", or "high level of occupation of the living room" (10) control mode, the main control system (48) is programmed to position each extraction aperture (11a) and each insufflation aperture (21) in the maximal throughput mode.

20. Method for heating and/or air conditioning as claimed in claim 18 or claim 19, **characterized in that** during the "smoky", or "high level of occupation of the living room" (10) control mode, the " bedrooms" sequence is triggered, either after the pre-determined period of time, or if the divergence between the actual temperature in one of the bedrooms (8,9) and the set temperature of the said bedroom becomes greater than a given value.

21. Method for heating and/or air conditioning as claimed in any one of the preceding claims, **characterized in that** the central control unit (48) is programmed to analyse the development of the temperatures in each main room (8,9,10), relative to the respective set temperatures, in order to command closure of the blower aperture(s) (5,6,7) of one of the main rooms (8,9,10), in the event of abnormal variation of temperature in the said room, and in order to emit an alarm signal which is representative of this closure.

22. Method for heating and/or air conditioning as claimed in claims 9 and 10 taken together, **characterized in that**, in the air-conditioning mode, the central control unit (48) is programmed to command extraction and insufflation of the maximal throughput of stagnant and renewed air, when the external temperature becomes lower than the set temperatures.

23. Method for heating and/or air conditioning as claimed in any one of the preceding claims, **characterized in that** use is made of a heat exchanger (18) for renewed air/extracted air, which is designed to assure pre-heating or pre-cooling of the renewed air.

24. Method for heating and/or air conditioning as claimed in any one of the preceding claims, **characterized in that** the central control unit (48) comprises manual controls, which can allow the user to pre-define a plurality of functioning characteristics such as:
. definition of at least two types of set temperatures for each main room (8,9,10), such as comfort temperature or reduced temperature; and
. definition daily or weekly, and in hourly steps, of the set temperature for each main room (8,9,10), such as anti-frost temperature, comfort temperature, reduced temperature etc.

25. Method for heating and/or air conditioning as claimed in any one of the preceding claims, intended for heating and/or air conditioning of several premises such as housing blocks, offices, lodging rooms, etc., **characterized in that** it comprises at least one internal unit (1), a central control unit (48) for each of the premises, and a centralised external unit (51) for the premises as a whole.

26. Method for heating and/or air conditioning as claimed in any one of claims 1 to 24, intended for heating and/or air conditioning of several premises such as housing blocks, offices, lodging rooms, etc., **characterized in that** it comprises at least one internal unit (1), a central control unit (48), and an external unit (50) for each of the premises.

27. Device for heating and/or air conditioning of premises containing at least one service room (15), and at least two main rooms (8,9,10), comprising:
. an external unit (50; 51) and at least one internal unit (1), the external unit (50; 51) comprising means for regulation with variable power and an exchanger, and each internal unit (1) comprising an air take-up unit (2), means for ventilation with a variable throughput and power and an exchanger, and being designed to assure heating and/or air conditioning of at least two main rooms (8,9,10);
. means (11a, 11b, 11c, 12, 13, 14) for discharge of stagnant air;
. means (17,21) for introduction of renewed air at the take-up units (2) of each internal unit (1);
. means (2) for mixture of renewed air/ air taken up in each internal unit (1), upstream from the exchanger of the latter;
. means (5,6,7) for blowing the mixture of renewed air/ air taken up present in each main room (8,9,10), in one or more blower apertures (5,6,7) which are supplied by at least one internal unit (1), and each of which is associated with means for motorisation which can modify the position of opening of the said apertures; and
. means (33; 38) for measuring the temperature in each main room (8,9,10), with which there are associated the means for motorisation of the blower aperture(s) (5,6,7) of the said main room, and which are designed to make it possible to obtain a set temperature in the said room, the said device for heating and/or air conditioning being **characterized in that** it comprises a central control unit (48) which is connected to the external unit (50; 51), to each internal unit (1), and to the means for motorisation of the blower apertures (5,6,7), the said central control unit being programmed to:
- either be configured in a mode for controlling the temperatures of the main rooms (8,9,10), during which:
. it controls the external (50; 51) an internal unit(s) (1) and the means for motorisation of the blower apertures (5,6,7), according to the information received from the means (33; 38) for measuring the temperature, such as to maintain the set temperature in each main room (8, 9, 10); and
. it detects the position of the means for motorisation of each blower aperture (5,6,7), such as to detect any total closure of the (or all the) blower(s) which supply a main room (8,9,10);
- or, on the assumption that all the apertures (5, and/or 6, and/or 7) which supply at least one main room (8, and/or 9, and/or 10) are closed, it is configured in a mode for control of renewed air, during which:
. it measures the time of closure of the said closed aperture(s) (5,6,7);
. beyond a time of closure of the said aperture(s) (5,6,7) which is greater than a pre-determined threshold, it calculates the deficit in the supply of renewed air in each room (8,9,10) which is not supplied, and controls the means for motorisation of all the blower apertures (5,6,7), such as to open each blower aperture (5,6,7) initially closed, and to close the blower apertures (5,6,7) initially opened of the other rooms, for a period of time which is designed to make up the deficit in renewed air supplied in each room not initially supplied; and
. it is reconfigured in a temperature control mode in the main rooms (8,9,10), when the deficit in the supply of renewed air has been made up.

28. Device for heating and/or air conditioning as claimed in claim 27, **characterized in that**, in its renewed air control configuration, the central control unit (48) is programmed to control the external unit (50; 51) and/or the internal unit(s) (1), such that the temperature of the mixed air blown is close to the set temperature of each room (8,9,10) initially closed.

29. Device for heating and/or air conditioning as claimed in claim 27 or claim 28, **characterized in that**:
. each blower aperture (5,6,7) comprises a main blower pipe (22), containing a closing shutter (23) which is controlled by means for motorisation, and an additional pipe (29) with a reduced cross-section;
. in its configuration for controlling the temperature, and on the assumption that all the blower apertures (5,6,7) are closed, the central control unit (48) is programmed to assure equal distribution of the air in all the rooms (8,9,10), by means of the additional pipes (29) of the blower apertures (5,6,7).

30. Device for heating and/or air conditioning as claimed in claim 29, **characterized in that** the means for motorisation of the blower apertures (5,6,7) are designed to position the closing shutters (23) in two positions, corresponding either to total closure, or to total or partial opening of the main pipes (22) of the said apertures.

31. Device for heating and/or air conditioning as claimed in claim 29 or claim 30, **characterized in that** the additional pipe (29) of each blower aperture (5,6,7) is equipped with an automatically adjustable modulator (30), which can make it possible to supply the same throughput of air for a given range of pressures.

32. Device for heating and/or air conditioning as claimed in any one of claims 29 to 31, **characterized in that** in each slot (29) of the blower apertures (5,6,7), there is integrated a flap (52) which is articulated around a transverse axis, and can oscillate freely from a position of total or partial closure of the said slot (29), towards a position of total opening of the said slot, according to the air pressure upstream from the latter.

33. Device for heating and/or air conditioning as claimed in any one of claims 27 to 32, **characterized in that** each blower aperture (5,6,7) is equipped with a temperature sensor (33; 38), pre-assembled to the said aperture, which acts as a means for measuring the temperature, and is disposed such as to be swept by the ambient air of the room, when the said blower aperture has been installed.

34. Device for heating and/or air conditioning as claimed in any one of claims 27 to 31, **characterized in that**, for each service room (15), the air extraction means comprise an extraction aperture (11a,11b,11c) which is connected to a main pipe (13,14), in which low pressure is created by means of a fan (12).

35. Device for heating and/or air conditioning as claimed in claim 34, **characterized in that** at least one extraction aperture (11a) is equipped with a manually-controlled throughput modulator (41).

36. Device for heating and/or air conditioning as claimed in any one of claims 27 to 35, **characterized in that** the means for introduction of renewed air comprise a pipe (19) which is provided with a fan (17), which is designed to supply this renewed air to each internal unit (1), at the level of an insufflation aperture (21) with a throughput which can be modulated, thus making it possible to adapt the throughput of renewed air to the throughput of air extracted.

37. Device for heating and/or air conditioning as claimed in claims 35 and 36 taken together, **characterized in that** the central control unit (48) is connected to each extraction aperture with a throughput which can be modulated (11a), and to each aperture (21) for insufflation of renewed air, and is programmed to adjust the throughput of the said insufflation apertures, such as to adapt the throughput of renewed air according to the throughput of air extracted.

38. Device for heating and/or air conditioning as claimed in claim 37, **characterized in that** it comprises a filtering system which is integrated in the pipe (19) for supply of renewed air, according to the ambient external pollution.

39. Device for heating and/or air conditioning as claimed in any one of claims 27 to 38, **characterized in that** it comprises:
. at least one sensor to measure the quality of the air in the premises, such as in particular a humidity sensor, a carbon dioxide sensor, etc.;
. an external pollution sensor to measure values corresponding to those of an internal sensor, i.e. a humidity sensor, a carbon dioxide sensor, etc.;
. the general central control unit being connected to the various internal and external sensors, and being programmed to optimise the throughput of renewed air which is actually necessary.

40. Device for heating and/or air conditioning as claimed in claim 39, **characterized in that** it comprises a single internal measuring sensor, the central control unit (48) being programmed to regulate the throughput of air extracted and the throughput of renewed air, according to the information supplied by the said sensor.

41. Device for heating and/or air conditioning as claimed in claim 39, **characterized in that**:
- each blower aperture (5,6,7) is equipped with a measuring sensor;
- the central control unit (48) is programmed such as to optimise the throughput of air extracted and the throughput of renewed air at each internal unit (1), according to:
. the position of the closing shutter (23) of the blower aperture(s) (5,6,7) of each room (8,9,10); and
. the information supplied by each sensor, which is representative of the level of pollution or occupation of the room concerned, and therefore its need for renewed air.

42. Device for heating and/or air conditioning as claimed in any one of claims 27 to 41, **characterized in that** the central control unit (48) is designed to be able to be positioned in a control mode which is known as "smoky", or "high level of occupation of one of the main rooms (10)", known as the "living room", during which:
- it is initially configured in a sequence known as "living room", at the beginning of which it commands opening of the blower aperture(s) (7) of the living room (10), and closure of the blower apertures (5,6) of all the other main rooms;
. it calculates a given maximal mixing throughput in the living room (10), and controls the unit (1) of the said living room such as to obtain this level of mixing;
. it adapts the thermal power supplied by the internal unit (1), such as to obtain the set temperature in the living room (10);
- after a pre-determined period of time, it is configured in a sequence known as "bedrooms", in which:
. it commands closure of the blower aperture(s) (7) of the living room (10), and opening of the blower apertures of the other main rooms (8,9) known as bedrooms;
. it calculates the deficit of renewed air in the bedrooms (8,9) during the living room sequence, and commands maintenance of this "bedroom" sequence for a period of time which is designed to make up for the said deficit of renewed air; and
. it is repositioned in its "living room" configuration, after this period of time has elapsed.

43. Device for heating and/or air conditioning as claimed in any one of claims 27 to 42, **characterized in that** the central control unit is programmed to analyse the development of the temperatures in each main room (8,9,10), relative to the respective set temperatures, in order to command closure of the blower aperture(s) (5,6,7) of one of the main rooms (8,9,10), in the event of abnormal variation of temperature in the said room, and in order to emit an alarm signal which is representative of this closure.

44. Device for heating and/or air conditioning as claimed in any one of claims 27 to 43, comprising a heat exchanger for renewed air/extracted air (18), which is designed to assure pre-heating and/or pre-cooling of the said renewed air.

45. Device for heating and/or air conditioning as claimed in any one of claims 27 to 44, **characterized in that** the central control unit (48) comprises manual controls, which can allow the user to pre-define a plurality of functioning characteristics such as:
. definition of at least two types of set temperatures for each main room (8,9,10), such as comfort temperature or reduced temperature; and
. definition daily or weekly, and in hourly steps, of the set temperature for each main room (8,9,10), such as anti-frost temperature, comfort temperature, reduced temperature etc.

46. Device for heating and/or air conditioning as claimed in any one of claims 27 to 45, intended for heating and/or air conditioning of several premises such as housing blocks, offices, lodging rooms, etc., **characterized in that** it comprises at least one internal unit (1), a central control unit (48) for each of the premises, and a centralised external unit (51) for the premises as a whole.

47. Device for heating and/or air conditioning as claimed in any one of claims 27 to 45, intended for heating and/or air conditioning of several premises such as housing blocks, offices, lodging rooms, etc., **characterized in that** it comprises at least one internal unit (1), a central control unit (48), and an external unit (50) for each of the premises.
